(19) **Europäisches Patentamt / European Patent Office / Office européen des brevets**

(11) **EP 1 796 072 A1**

(12) **EUROPEAN PATENT APPLICATION**
published in accordance with Art. 158(3) EPC

(43) Date of publication:
**13.06.2007 Bulletin 2007/24**

(51) Int Cl.:
*G09G 3/36* (2006.01)   *G09G 3/20* (2006.01)
*H04B 1/707* (2006.01)   *H04N 5/66* (2006.01)
*H04N 5/00* (2006.01)   *G09G 5/00* (2006.01)

(21) Application number: **05783157.0**

(22) Date of filing: **07.09.2005**

(86) International application number:
**PCT/JP2005/016884**

(87) International publication number:
**WO 2006/040898 (20.04.2006 Gazette 2006/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.09.2004 JP 2004261983**
**09.09.2004 JP 2004261984**

(71) Applicant: **SEIKO EPSON CORPORATION**
**Shinjuku-ku**
**Tokyo 163-0811 (JP)**

(72) Inventor: **IKEDA, Masayuki,**
**SEIKO EPSON CORPORATION**
**Suwa-shi, Nagano 392-8502 (JP)**

(74) Representative: **HOFFMANN EITLE**
**Patent- und Rechtsanwälte**
**Arabellastrasse 4**
**81925 München (DE)**

(54) **DISPLAY DEVICE**

(57)    A display device has dividing means for dividing and generating display data for display in display means as plural N serial signals; means for multiplying each of said serial signals by a different code; synthesizing means for synthesizing an output signal of said multiplying means to serial signals smaller than said N in number; restoring means for receiving an output signal of said synthesizing means and calculating the correlation with said code and restoring said display data; wherein said display means is operated on the basis of a signal restored by said restoring means.

FIG. 1

EP 1 796 072 A1

## Description

Technical Field

The present invention relates to a display device requiring large capacity data transfer of high speed in driving of a large-sized display element of a high precision television, etc.

Background Art

In recent years, the functional improvements of a television, a note book computer, etc. are remarkable, and the screen is large-sized and high resolution and high precision are advanced. In particular, in a digital high vision using a flat panel display, etc., the display device is large-sized and the number of pixels is very large, and a frequency band of its driving signal is very wide.

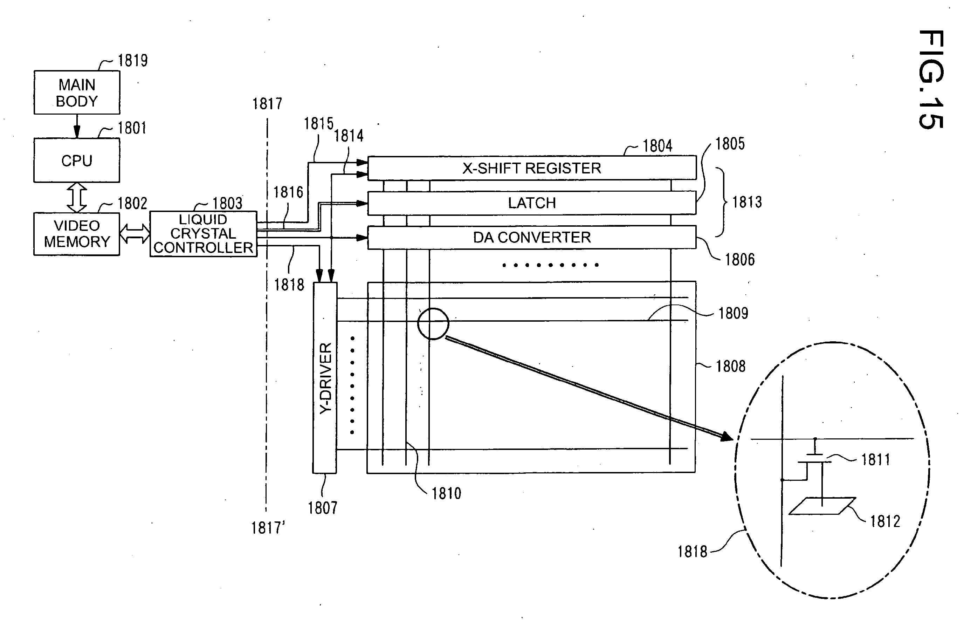

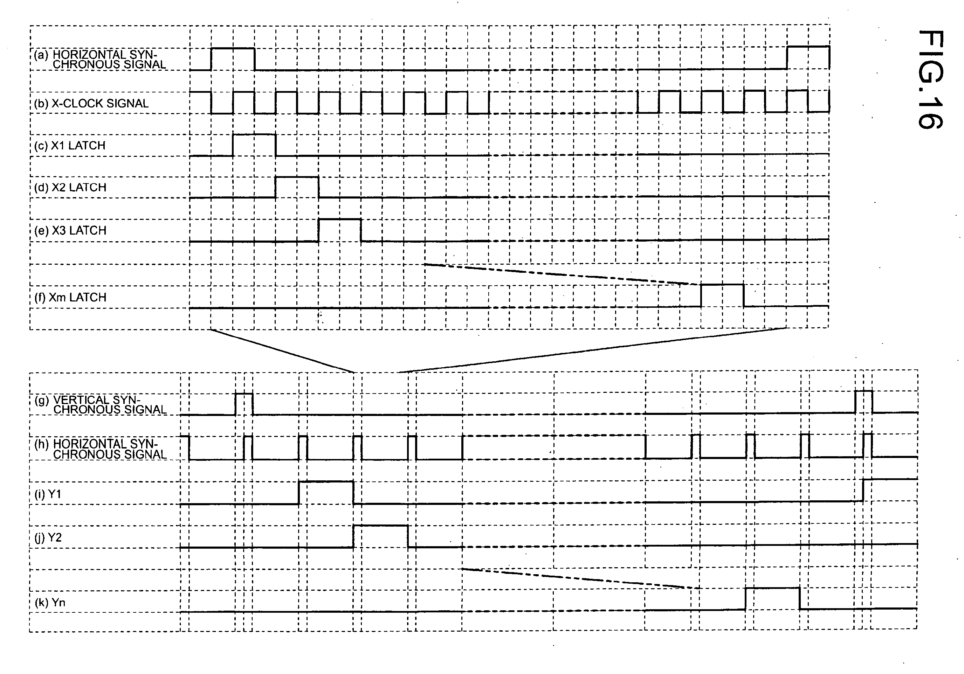

Fig. 15 is a block diagram showing the typical construction of a display device using an active matrix type liquid crystal display body as a display element, and Fig. 16 is its time chart.

As shown in Fig. 15, a CPU 1801 generates image data to be displayed in accordance with instructions of a main body section 1819, and writes the image data into a video memory 1802. Here, the main body section 1819 means a main body circuit including a tuner and a demodulating section in the television, and a main body section including a DVD player regenerating section, etc., an input-output device of a computer, etc. The CPU 1801 receives a signal of the main body section 1819, and generates image data to be displayed by expansion and an arithmetic operation from its image signal and a compression image and dynamic image data of JPEG, MPEG, etc. The CPU 1801 then stores these image data to the video memory 1802, and sequentially rewrites and updates the image data in accordance with necessity.

A liquid crystal controller 1803 generates various kinds of timings required in the liquid crystal display, i.e., an X-clock signal 1815 of an X-driver 1813, a horizontal synchronous signal 1814 and a vertical synchronous signal 1818. The liquid crystal controller 1803 also reads the image data in accordance with an order to be displayed from the video memory 1802, and sends out the image data to a driver (the X-driver 1813 and a Y-driver 1807) of a liquid crystal display body 1808. Here, when pixels of the liquid crystal display body 1808 are constructed by n-rows and m-columns, the X-driver 1813 is constructed from X-shift registers 1804 of m-stages, latches 1805 of m-words and m DA converters 1806. These X-shift registers 1804 of m-stages, the latches 1805 of m-words and the m DA converters 1806 are normally divided into plural sets and are integrated on a semiconductor integrated circuit, and are arranged around the liquid crystal display body 1808.

When the liquid crystal controller 1803 reads the lead pixel of a display frame, the liquid crystal controller 1803 generates the vertical synchronous signal 1818, and sends-out the vertical synchronous signal 1818 to the Y-driver 1807. At this time, the liquid crystal controller 1803 simultaneously reads data displayed in the pixel of a first row and a first column of the liquid crystal display body 1808 from the video memory 1802, and sends-out these data to a data terminal of the latch 1805 as a display data signal 1816. Here, for example, the display data signal 1816 has 8 bits in each of RGB every pixel. These bits are transmitted as parallel data of 24 bits in parallel by using 24 transmission lines, or are transmitted at a transmission rate of 24 times after parallel serial conversion.

As shown in Fig. 16, the X-shift register 1804 reads the horizontal synchronous signal 1814 generated by the liquid crystal controller 1803 in synchronization with an X-clock signal 1815, and generates a signal X1 latch (Fig. 16(c)) for latching the image data of a first column. The data displayed in the pixel of the first row and the first column are latched to a first column of the latch 1805 by this signal. Subsequently, the liquid crystal controller 1803 reads and outputs data to be displayed in the next pixel from the video memory 1802. The X-shift register 1804 of the X-driver 1813 shifts the horizontal synchronous signal 1814 by one, and generates a signal X2 latch (Fig. 16(d)) for latching the image data of a second column, and latches the image data of the first row and the second column.

The X-shift register 1804 next sequentially shifts the horizontal synchronous signal 1814, and sequentially latches the data displayed in the first row. When the display data signal 1816 is sent by plural transmission lines as parallel data every pixel in such an operation, the display data are read into the latch 1805 in parallel every X-clock of one time. When the display data signal 1816 is sent as serial data, the display data are read into the latch 1805 in parallel after serial parallel conversion. No explanation of such an operation will be required.

When the latch 1805 completely stores data of one row, the next horizontal synchronous signal 1814 is outputted (it should be noted that the time scale of the axis of abscissa is changed in Figs. 16(a) and 16(h), Figs. 16(a) to 16(f) and Figs. 16(g) to 16(k). Therefore, Fig. 16 (h) is again described in addition to Fig. 16(a) with respect to the horizontal synchronous signal 1814 as the same signal). A DA converter 1806 DA-converts data held in the latch 1805, and outputs these data to an Xi-th column electrode 1810 $(1 \le l \le m)$. The Y-driver 1807 simultaneously outputs a selecting signal to a row electrode Y1 of a first row.

In the following description, the Y-driver 1807 similarly sequentially shifts the selecting signal to a Yj-th row electrode 1809 $(1 \le j \le n)$ every time the horizontal synchronous signal 1814 is outputted.

Fig. 15 is a view for enlarging one pixel portion arranged in a matrix of the liquid crystal display body 1808 within a one-dotted chain line 1818. When the Yj-th row electrode 1809 is selected, the active switch element 1811 transmits the output of the DA converter 1806 outputted to an Xi-th column electrode 1810 to a pixel electrode 1812. One DA converter 1806 can be arranged on the liquid crystal controller side, and data 1816 can be also transmitted by an analog signal. In this case, the latch 1805 becomes an analog sample and hold circuit. This method can reduce the number of DA converters, and is conventionally used in many cases. However, although it is the DA converter, it is sufficient to finally set a voltage value applied to the pixel electrode 1812 to a predetermined value. Accordingly, it is possible to use a digital circuit of pulse width modulation, etc., and no analog sample and hold circuit is required. Therefore, as the density of LSI is increased, the method explained here has become the main current.

However, in this method, data are sent by a digital signal. Therefore, the number of signal lines is very large. For example, 24 signal lines in total constructed by 8 bits x 3 primary colors are required. Further, the information amount of image data required in the display of one frame becomes this resolution (pixel number) times.

The time after the display signal of the right-hand end of a row is outputted from the liquid crystal controller 1803 until the display signal of the left-hand end of the next row is outputted, and the time after the image data of a lowermost row of the screen are completely outputted until the image data of a first row of the next frame are outputted, are called (horizontal and vertical) blanking periods or fly-back periods. These times cannot be set to zero in CRT, but may be also set to zero in the liquid crystal display body. Fig. 16 illustrates a case in which the horizontal fly-back period of one pixel and the vertical fly-back period of one row are set.

As the display body is large-sized and resolution is raised in recent years, the transfer speed of image data to be transferred from the liquid crystal controller 1803 exceeds giga bits per second. For example, if the screen of a pixel number of 1920×1080 in the resolution of a high vision class is displayed by 60 frames per second, a data transfer speed of 1920x1080x24x60 ≅ 2.986 Gbps (bits per second) is required.

Further, in accordance with the multimedia period, various functions are added to the main body section 1819 with respect to the displayed data in many cases. It is desirable that the liquid crystal display body 1808 and the main body section 1819 can be separated into a detachable state. A mounting substrate is separated into plural portions from such a request. In this case, the mounting substrate is often divided on a one-dotted chain line 1817-1817' of Fig. 15. A connection line between the main body section 1819 and the liquid crystal display body 1808 is necessarily lengthened.

Further, as the resolution of the liquid crystal display body 1808 is raised, signal frequencies of these line paths are raised so that it has become difficult to connect these line paths. Further, the display screen itself becomes large. For example, it is actually impossible to deliver data exceeding giga bits per second to a liquid crystal driver (particularly X-driver 1813) arranged around the screen exceeding 100 inches. Therefore, a method for reducing the transmission speed of each line path by setting the display data in parallel and arranging many line paths is taken. However, when the high vision class is set, this line path number becomes very large, and exceeds 100.

To solve this problem, for example, the use of LVDS (Low Voltage Differential Signaling) in the connection of a display driver (Japanese patent No. 3086456 (column 44) and Japanese patent No. 3330359 (column 46)) is proposed as a system of high speed data transmission. In Japanese patent No. 3349426 and Japanese patent No. 3349490, etc., new methods are also proposed since no sufficient solution can be obtained even in this system.

However, the advancement of an increase in the size of the recent display body is remarkable, and no sufficient performance can be also obtained in these techniques. Careful design and adjustment are required to obtain sufficient noise resisting characteristics (interference resisting property and interference providing property). Further, since a signal level is small in LVDS, an analog signal is necessarily treated by a digital IC. Therefore, a problem exists in that electric power consumption is increased.

A matched impedance terminal is required to precisely transmit a signal. However, the number of lines requiring the impedance terminal is large, and transmission impedance is about 100 ohms at most. Accordingly, a problem also exists in that electric power consumed in their terminal resistors is increased to such an extent that this increase cannot be allowed.

Further, when the mounting substrate is divided on the one-dotted chain line 1817-1817' of Fig. 15, it is necessary to transmit a large amount of data at high speed through a line path drawn by long wiring. Therefore, a radiating electromagnetic field from the line path is increased, and becomes a factor of electromagnetic wave obstruction with respect to another electronic device or a self device. In conventional signal transmission using a signal line, an amplitude level at an electricity receiving terminal is prescribed and no amplitude level of the signal can be lowered even when sufficient quality at the electricity receiving terminal is secured. Namely, an EMI countermeasure becomes difficult. As a result, restriction with respect to a device design and an increase in cost are caused. On the signal transmission side, a driving operation is simultaneously performed with respect to floating capacity of the line path in addition to the load of the electricity receiving terminal. Therefore, additional energy is required in the signal transmission. Namely, it results in an increase in electric power consumption.

Further, a physical space for wiring is required by the increase in the wiring number caused by transferring data at high speed, and this increase naturally imposes a great restriction on the design of a device.

Further, when the wiring particularly passes through a movable portion such as a hinge portion, etc., characteristic impedance is changed in accordance with a bending degree of the movable portion. Therefore, impedance mismatching is caused in accordance with situations, and signal deterioration is caused by reflection in the bending portion, etc. Therefore, a problem exists in that the transmission speed of transmitted data is limited and a mounting method and the arrangement of parts are restricted. Further, since the number of transmitted and received signals exceeds 100, there are defects in that cost of a flexible substrate and a connector for making this connection is high and connection reliability is low.

Therefore, an object of the present invention is to realize a display device for improving the method of high speed transmission of data having various problems and restrictions mentioned above by a perfectly new method not existing in the conventional case, and removing these conventional defects and restrictions, and manufactured at low cost and having high reliability.

Disclosure of the Invention

A display device in accordance with one mode of the present invention comprises:

> display means for displaying display data;
> dividing means for dividing and generating the display data displayed in said display means as plural N (N is an integer of 2 or more) serial signals;
> multiplying means for multiplying each of said serial signals by a different code;
> synthesizing means for synthesizing an output signal of said multiplying means to serial signals smaller than said N in number;
> restoring means for restoring said display data by calculating the correlation with an output signal of said synthesizing means and said code; and
> driving means for operating said display means on the basis of a signal restored by said restoring means.

The display data transmitted to the display means are code-divided, multiplexed and transmitted by this construction of the present invention. Accordingly, a band width required in a line path can be narrowed, and the transmission can be easily realized. Transmission using a small transmission line number, and the relaxation of a limit of a frequency band required on each transmission line can be performed.

Said display means of the display device in accordance with one mode of the present invention has pixels arranged in a matrix shape, and the display is performed by line sequential scanning.

In accordance with the above construction of the present invention, the present invention can be executed in a large-sized display device of large capacity in the display of a planar television, a notebook computer, etc.

Said dividing means of the display device in accordance with one mode of the present invention divides pixel data of each pixel every bit, and serially outputs the pixel data every pixel.

In accordance with the above construction of the present invention, the pixel data conventionally outputted and transmitted in parallel, or parallel-serial-converted and transmitted as high speed serial data can be transmitted by code division multiplexing every pixel. Transmission using a small transmission line number can be performed, and a transfer speed every bit can be lowered, and a condition required on the transmission line can be relaxed.

Said dividing means in the display device in accordance with one mode of the present invention divides columns of said display means into N-sets, and serially outputs a pixel signal every said each set.

In accordance with the above construction of the present invention, the pixel data conventionally transmitted as high speed serial data can be transmitted by the code division multiplexing. Transmission using a small transmission line number can be performed, and the transfer speed every bit can be lowered, and the condition required on the transmission line can be relaxed.

Another display device in accordance with one mode of the present invention comprises:

> display means having pixels arranged in a matrix shape;
> dividing means for dividing display data displayed in said display means every column of plural N (N is an integer of 2 or more) sets, and generating the display data as serial signals;
> multiplying means for multiplying each of said serial signals by a different code;
> synthesizing means for synthesizing an output signal of said multiplying means to serial signals smaller than said N in number;
> restoring means for restoring said display data by calculating the correlation with an output signal of said synthesizing means and said code;
> memory means for temporarily storing an output signal of said restoring means; and
> driving means for operating said display means every column on the basis of the signal stored by said memory means.

In accordance with the above construction of the present invention, display information can be temporarily stored to the signal reception side of the display data. Therefore, if no display data already sent out are changed, the display data stored to the memory means can be used and displayed. Accordingly, the sending out of the display data is stopped and the electric power consumption of a circuit can be reduced.

In the display device in accordance with one mode of the present invention, said dividing means outputs the display data to only a set requiring rewriting.

In accordance with the above construction in the present invention, the pixel data transmitted to the display means can be rewritten with respect to only a portion requiring the rewriting. Accordingly, even when a display image is at rest every frame, its electric power consumption can be greatly reduced in comparison with a conventional system for always transferring and updating the image data.

The display device in accordance with one mode of the present invention further has:

a first diffusion code generating circuit for generating a code supplied to said multiplying means; and
a second diffusion code generating circuit for generating the same code as a code supplied to said restoring means and supplied to said multiplying means; and
the operations of said first diffusion code generating circuit and said second diffusion code generating circuit are synchronized by the same clock signal.

In accordance with the above construction in the present invention, a signal for synchronization of diffusion code generation on the signal reception side can be directly acquired from the signal transmission side. Therefore, no special circuit for taking the synchronization of the diffusion code generation on the signal reception side is required, and synchronization capture can be simplified.

Another display device in accordance with one mode of the present invention comprises:

display means having pixels arranged in a matrix shape and displayed and operated by line sequential scanning;
display data generating means for generating display data every scanning line of said display means;
driving means divided into N (N is an integer of 2 or more) sets for delivering the display data generated by said display data generating means to each predetermined pixel as driving data; and
detecting means for detecting a pixel different in the display data between adjacent scanning lines;

wherein the display data are sent out from said display data generating means to said driving means with respect to only a set including one pixel or more for displaying the display data different from the display data displayed on a just close scanning line.

In accordance with the above construction of the present invention, if there is no difference in the display data between an image displayed on a just-above scanning line displayed in the display device and an image displayed on a scanning line intended to be displayed this time, the transmission of the display data is stopped. Accordingly, the operation of a circuit for the transmission line and the operation of the display body can be stopped, and electric power consumption of the device can be greatly reduced. In particular, the correlation of the display data between the scanning lines is strong, and a structure for separating one scanning line into some sets is taken. Accordingly, there is a great effect in comparison with control every frame.

In the display device in accordance with one mode of the present invention, a code for code multiplexing is allocated to each set of said driving means, and it is designated whether the display data are sent to which set of said driving means by said code in the transmission of the display data from said display data generating means to said driving means.

In accordance with the above construction of the present invention, addressing for delivery of the display data is performed by a code. Therefore, the addressing can be realized by a simple circuit, and the transmission rate can be reduced, and a resisting property with respect to an obstacle such as distortion, etc. in a line path can be strongly set. A frequency component of a transmitted signal is diffused, and there is also a great effect with respect to the EMI countermeasure.

In the display device in accordance with one mode of the present invention, said code is an orthogonal code.

In accordance with the above construction of the present invention, since the code used in the code division multiplexing is the orthogonal code, the correlation between respective codes can be perfectly set to zero, and each data can be perfectly separated and restored from a multiplexed image signal.

Another display device in accordance with one mode of the present invention comprises:

display means for displaying display data;
dividing means for dividing and generating the display data displayed in said display means as plural N (N is an integer of 1 or more) serial signals;
plural multiplying means for multiplying each of said serial signals by a different code;
signal transmitting means for converting a signal outputted from said multiplying means into an electromagnetic wave signal, and transmitting the electromagnetic wave signal;
signal receiving means for receiving said electromagnetic wave signal;
restoring means for restoring said display data by calculating the correlation with the receiving signal received by said signal receiving means and said code; and
driving means for operating said display means on the basis of a signal restored by said restoring means.

In accordance with this construction of the present invention, the display data transmitted to the display means are code-divided and multiplexed and are transmitted as an electromagnetic wave signal. Accordingly, various problems caused in conventional high speed large amount data transmission using wire can be excluded at a stretch. Further, since the diffusion and the multiplexing are performed by a code, the number of transmission lines is reduced. An energy spectrum of a signal can be concentrated near a wireless frequency by suitably selecting the diffusion code, and wireless transmission using an electromagnetic wave can be easily realized. Further, transmission using a small transmission line number and the relax of a limit of a frequency band required on each transmission line can be performed. Therefore, a signal can be wirelessly transmitted and received by the electromagnetic wave by the above construction. Since the signal is propagated in a space, it is not necessary to wire a flexible substrate and a connector. The problems of an increase in cost and reliability caused by these are removed. Further, it is also possible to avoid a terminal for impedance matching and the problem of electric power consumption increased as the data transfer speed is raised. Further, the restriction of drawing of wiring and a part arrangement is removed, and the design of an electronic device and using convenience can be improved. Since the signal transmission using this electromagnetic wave is performed at a close distance within the same device, it is sufficient to secure communication within this distance, and the intensity of the radiating electromagnetic wave can be lowered until a limit. Accordingly, EMI characteristics can be essentially improved and its countermeasure is easily taken.

Said signal transmitting means of the display device in accordance with one mode of the present invention has:

synthesizing means for synthesizing the output signal of said multiplying means to serial signals smaller than said N in number;
modulating means for modulating a signal outputted from said synthesizing means to a predetermined wireless frequency; and
a transmission antenna for radiating an electromagnetic wave by receiving an output from said modulating means.

In accordance with the above construction of the present invention, the display data signal is multiplexed and is transmitted by modulating means and antenna means smaller than N in number. Therefore, the numbers of modulating means and antenna means are reduced and a dispersion level of the multiplexed signal of each channel can be restrained so as to be small, and the device is easily realized.

Said signal transmitting means of the display device in accordance with one mode of the present invention has:

plural modulating means for modulating the output signal of each of said multiplying means to a predetermined wireless frequency; and
plural transmission antennas for radiating an electromagnetic wave by receiving an output of each of said plural modulating means.

In accordance with the above construction of the present invention, the divided display data signal is multiplied by a code and is directly modulated every signal divided without synthesis, and is radiated as an electromagnetic wave signal from a different antenna. The signal is synthesized in a space. Therefore, no circuit for the synthesis required in an analog adding calculation is required, and it is easily realized by a semiconductor integrated circuit.

The signal outputted from said multiplying means of the display device in accordance with one mode of the present invention has a wireless frequency component sufficient to radiate electromagnetic field energy, and plural transmission antennas for radiating the electromagnetic wave by receiving each signal of said multiplying means are arranged.

In accordance with the above construction of the present invention, a signal including sufficient wireless frequency energy in the code multiplied by the multiplying means is used. Accordingly, the multiplying means can also function as the modulating means, and no modulating means for modulating the signal to a wireless frequency is required, and the circuit construction can be simplified.

Said display means of the display device in accordance with one mode of the present invention has pixels arranged in a matrix shape, and the display is performed by line sequential scanning.

In accordance with the above construction of the present invention, the present invention can be executed in a large-sized display device of large capacity in the display of a planar television, a notebook computer, etc.

Said dividing means of the display device in accordance with one mode of the present invention divides pixel data of each pixel every bit, and serially outputs the pixel data every pixel.

In accordance with the above construction of the present invention, the pixel data conventionally outputted and transmitted in parallel, or parallel-serial-converted and transmitted as high speed serial data can be transmitted by code division multiplexing every pixel. Further, a transfer speed every bit can be lowered, and a condition required on the transmission line of an electromagnetic wave can be relaxed.

Said dividing means of the display device in accordance with one mode of the present invention divides columns of said display means into N-sets, and outputs a pixel signal of said each set in parallel.

Since the columns of display are divided into N by the above construction of the present invention, control every set can be performed. In particular, there are many cases in which a driving circuit of the display means is divided into some portions every column or every row, and is mounted to a semiconductor integrated circuit. Therefore, the present construction in the present invention is advantageous. Further, the transmission using the code division multiplexing using an electromagnetic wave can be performed, and the transfer speed every bit can be lowered, and the condition required on the transmission line of the electromagnetic wave can be also relaxed.

Another display device in accordance with one mode of the present invention comprises:

> display means having pixels arranged in a matrix shape;
> dividing means for dividing display data displayed in said display means every column of plural N (N is an integer of 1 or more) sets, and generating the display data as serial signals;
> multiplying means for multiplying each of said serial signals by a different code;
> synthesizing means for synthesizing an output signal of said multiplying means to serial signals smaller than said N in number;
> signal transmitting means for converting a signal outputted from said synthesizing means into an electromagnetic wave signal, and transmitting the electromagnetic wave signal;
> demodulating means for receiving and demodulating said electromagnetic wave signal;
> restoring means for restoring said display data by calculating the correlation with an output of said demodulating means and said code;
> memory means for temporarily storing an output signal of said restoring means; and
> driving means for operating said display means every column on the basis of the signal stored by said memory means.

In accordance with the above construction in the present invention, the memory means for temporarily storing the display data restored by the restoring means is arranged on the display means side. Therefore, when the display data previously sent out by this memory means are the same, the sending out of the display data can be stopped by using the display data previously sent out and stored to the above memory means, and electric power consumption of the device can be reduced.

In the display device in accordance with one mode of the present invention, said dividing means outputs the display data to only a set requiring rewriting.

In accordance with the above construction in the present invention, the pixel data transmitted to the display means can be rewritten with respect to only a portion requiring the rewriting. Accordingly, even when a display image is at rest, its electric power consumption can be greatly reduced in comparison with a conventional system for always transferring and updating the image data every frame.

The display device in accordance with one mode of the present invention further comprises:

> a first code generating circuit for generating a code supplied to said multiplying means; and
> a second code generating circuit for generating the same code as a code supplied to said restoring means and supplied to said multiplying means; and
> the operations of said first code generating circuit and said second code generating circuit are synchronized by the same clock signal.

In accordance with the above construction in the present invention, a signal for synchronization of diffusion code generation on the signal reception side can be directly acquired from the signal transmission side. Therefore, no special circuit for taking the synchronization of the diffusion code generation on the signal reception side is required, and synchronization capture can be simplified.

Another display device in accordance with one mode of the present invention comprises:

> display means having pixels arranged in a matrix shape and displayed and operated by line sequential scanning;
> display data generating means for generating display data every scanning line of said display means;
> signal transmitting means for converting a signal outputted from said display data generating means into an electromagnetic wave signal, and transmitting the electromagnetic wave signal;
> demodulating means for receiving and demodulating said electromagnetic wave signal;
> driving means divided into N (N is an integer of 1 or more) sets for delivering the display data demodulated by said demodulating means to each predetermined pixel as driving data; and
> detecting means for detecting a pixel different in the display data between adjacent scanning lines;

wherein the display data are sent out from said display data generating means to said driving means with respect to only a set including one pixel or more for displaying the display data different from the display data displayed on a just close scanning line.

In accordance with the above construction of the present invention, if there is no difference in the display data between an image displayed on a just-above scanning line displayed in the display device and an image displayed on a scanning line intended to be displayed this time, the transmission of the display data is stopped. Accordingly, the operation of a circuit for the transmission line and the operation of the display body can be stopped, and electric power consumption of the device can be greatly reduced. In particular, the correlation of the display data between the scanning lines is strong, and a structure for separating one scanning line into some sets is taken. Accordingly, there is a great effect in comparison with control every frame.

In the display device in accordance with one mode of the present invention, a code for code multiplexing is allocated to each set of said driving means, and it is designated whether the display data are sent to which set of said driving means by said code in the transmission of the display data from said display data generating means to said driving means.

In accordance with the above construction of the present invention, addressing for delivery of the display data is performed by a code. Therefore, the addressing can be realized by a simple circuit, and the transmission rate can be reduced, and a resisting property with respect to an obstacle such as distortion, etc. in a line path can be strongly set. A frequency component of a transmitted signal is diffused, and there is also a great effect with respect to the EMI countermeasure.

Said code of the display device in accordance with one mode of the present invention is an orthogonal code, the same PN code shifted in phase, or the same PN code shifted in phase and adding an offset.

In accordance with the above construction of the present invention, since the code used in the code division multiplexing is an orthogonal code, the correlation between respective codes can be perfectly set to zero, and each data can be perfectly separated and restored from a multiplexed image signal. Further, when the code used in the code division multiplexing is a PN series, the correlation can be set to be very small if the code phase is different even when the same code is used. Therefore, the multiplexing can be performed by using one code, and each data can be separated and restored from the multiplexed image signal.

Brief Description of the Drawings

Fig. 1 is a block diagram showing a main portion of one embodiment of the present invention.
Fig. 2 is a block diagram showing multiplexing of one embodiment of the present invention and its restoring circuit portion.
Fig. 3 is a time chart showing an operation of one embodiment of the present invention.
Fig. 4 is a block diagram describing a restoring circuit portion of another embodiment of the present invention in detail.
Fig. 5 is a block diagram showing still another embodiment of the present invention.
Fig. 6 is a block diagram showing still another embodiment of the present invention.
Fig. 7 is a block diagram showing a main portion of still another embodiment of the present invention.
Fig. 8 is a block diagram showing multiplexing of still another embodiment of the present invention and its restoring circuit portion.
Fig. 9 is a time chart showing an operation of still another embodiment of the present invention.
Fig. 10 is a block diagram showing a main portion of still another embodiment of the present invention.
Fig. 11 is a block diagram showing a main portion of still another embodiment of the present invention.
Fig. 12 is a block diagram showing a main portion of still another embodiment of the present invention.
Fig. 13 is a block diagram showing a main portion of still another embodiment of the present invention.
Fig. 14 is a time chart showing still another operation of one embodiment of the present invention.
Fig. 15 is a block diagram for explaining a display device having a conventional liquid crystal display body.
Fig. 16 is a time chart for explaining the operation of the display device having the conventional liquid crystal display body.

Best Mode for Carrying Out the Invention

The embodiment modes of the present invention will next be explained by using the drawings.

[Embodiment 1]

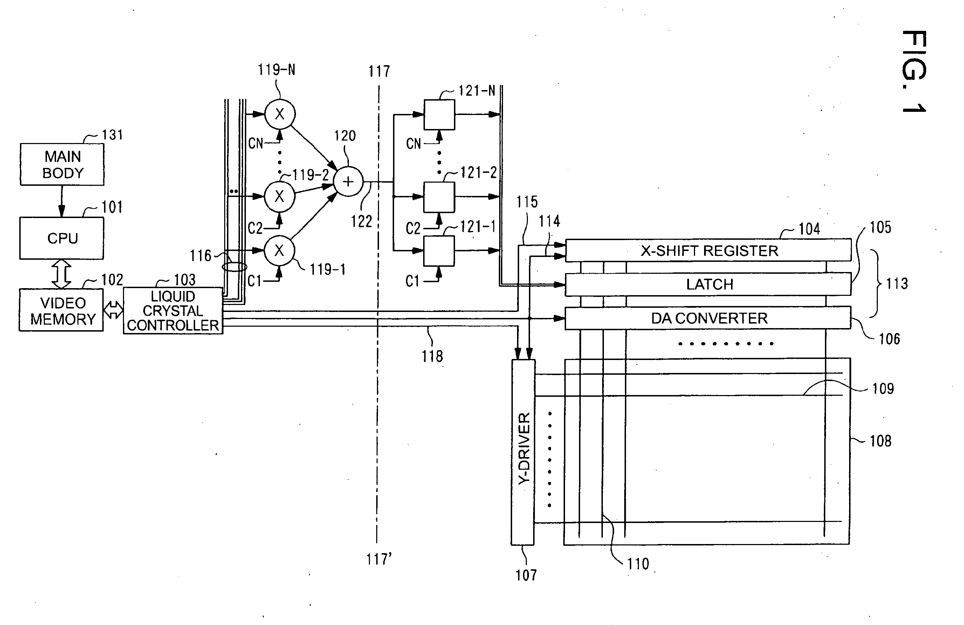

Fig. 1 is a view showing a main portion of an embodiment of a display device in the present invention. Fig. 1 illustrates a typical block diagram of the display device using an active matrix type liquid crystal display body as a display element.

As shown in Fig. 1, a CPU 101 generates image data to be displayed in accordance with instructions of a main body section 131, and writes these image data into a video memory 102. Here, the main body section 131 means a main body circuit including a tuner and a demodulating section in a television, and a main body portion including a DVD player regenerating section, etc., an input-output device of a computer, etc. The CPU 101 receives a signal of the main body section 131, and generates image data to be displayed by expansion and an arithmetic operation from its image signal, a compression image of JPEG, MPEG, etc. and dynamic image data. The CPU 101 then stores these image data to the video memory 102 and sequentially rewrites and updates the image data in accordance with necessity.

A liquid crystal controller 103 generates various kinds of timings required in liquid crystal display, i.e., an X-clock signal 115 of an X-driver 113, a horizontal synchronous signal 114 and a vertical synchronous signal 118. The liquid crystal controller 103 also reads the display data from the video memory 102 along an order to be displayed. At this time, the display data are read out of the video memory 102 as serial data of bit parallel every pixel, and are outputted as a display data signal 116.

Here, multiplying circuits 119-1, 119-2, ---, 119-N corresponding to respective bits of the display data are arranged on the main body section 131 side. A diffusion code $C_k$ (k=1, 2, ---, N) is supplied to each of the multiplying circuits 119-1, 119-2, ---, 119-N. Each bit of this display data signal 116 is multiplied by the diffusion code $C_k$ (k=1, 2, ---, N) in the multiplying circuits 119-1, 119-2, ---, 119-N, and is analogically added by an adding circuit 120, and is sent out onto the liquid crystal display body 108 side as a multiplexing signal 122.

Here, correlation circuits 121-1, 121-2, ---, 121-N corresponding to the respective bits of the display data are arranged on the liquid crystal display body 108 side. The diffusion code $C_k$ (k=1, 2, ---, N) is supplied to each of the correlation circuits 121-1, 121-2, ---, 121-N. The correlation of the same diffusion code $C_k$ (k=1, 2, ---, N) as the diffusion code multiplied with respect to the multiplexing signal 122 on the signal transmission side is calculated by each of the correlation circuits 121-1, 121-2, ---, 121-N on the liquid crystal display body 108 side. The multiplying signal is restored to serial data of bit parallel every pixel and is sent out to a latch 105. The restoration of the multiplexing signal 122 can be also realized by a method using a matching filter, etc. When the matching filter is used, a synchronous procedure with the diffusion code can be simplified.

When the pixels of the liquid crystal display body 108 are constructed by n-rows and m-columns, the X-driver 113 is constructed from X-shift registers 104 of m-stages, latches 105 of m-words, and m DA converters 106. These X-shift registers 104 of m-stages, the latches 105 of m-words and the m DA converters 106 are normally divided into plural sets, and are integrated on a semiconductor integrated circuit, and are arranged around the liquid crystal display body 108.

When the lead pixel of a display frame is read out, the liquid crystal controller 103 generates the vertical synchronous signal 118, and sends out this vertical synchronous signal 118 to a Y-driver 107. At this time, data displayed in the pixel of a first row and a first column are simultaneously restored as parallel data every pixel by the correlation circuits 121-1, 121-2, ---, 121-N, and are latched to the latch 105. A reading clock of the latch 105 generated by the X-shift register 104 is shifted and latched in the column direction every time the X-clock signal 115 is next sequentially inputted.

For example, the display data signal 116 conventionally has 8 bits of each of RGB every pixel, and these bits are transmitted as parallel data of 24 bits in parallel by using 24 transmission lines, or are transmitted at a transmission rate of 24 times after parallel serial conversion. However, in accordance with the embodiment mode of Fig. 1, this signal is code-multiplexed as the multiplexing signal 122. Therefore, it is sufficient to arrange one transmission line. In this example, all the 24 bits of the display data signal 116 are multiplexed to one line. However, for example, the display data signal 116 may be multiplexed every 8 bits, and may be also transmitted by three transmission lines. In such a case, the number of transmission lines of the signal can be also greatly reduced. Further, the transmission rate per each bit line of the display data signal 116 is the same as the conventional case for drawing 24 signal lines. Accordingly, it should be noted that no transmission rate is raised 24 times as in multiplexing using the parallel serial conversion.

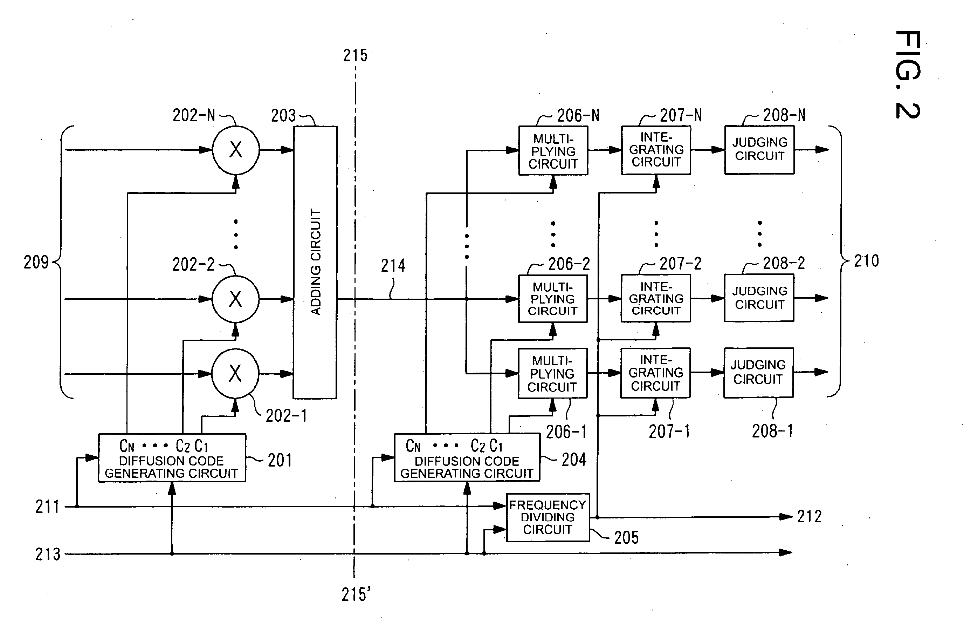

Fig. 2 is a view for explaining in more detail an example of multiplexing of the display data signal of the display device in the present invention and its restoration, i.e., portions of the multiplying circuits 119-1, 119-2, ---, 119-N, the adding circuit 120 and the correlation circuits 121-1, 121-2, ---, 121-N of Fig. 1.

In Fig. 2, the display data signal 116 read out by the liquid crystal controller 103 of Fig. 1 is changed into bit parallel every pixel, and is outputted to a terminal 209. Each bit of the display data is multiplied by each diffusion code $C_k$ (k=1, 2, ---, N) generated by a diffusion code generating circuit 201 by multiplying circuits 202-1, 202-2, ---, 202-N, and is analogically added by an adding circuit 203, and is sent out to the liquid crystal display body 108 side of Fig. 1 as a multiplexing signal 214. The inputs of the multiplying circuits 202-1, 202-2, ---, 202-N are digital binary values. If the diffusion code $C_k$ is also binary, the multiplying circuits 202-1, 202-2, ---, 202-N can be constructed by an exclusive logical sum circuit. Since the output of the adding circuit 203 becomes a multiple value, an analog adding calculation is required. In the adding circuit 203, -1 V corresponds to its output at the time of an output logic 1 of the multiplying circuits 202-1, 202-2, ---, 202-N, and 1 V corresponds to its output at the time of an output logic 0, and the analog adding calculation is made.

The multiplexing signal 214 transmitted to the liquid crystal display body 108 side is multiplied by each of the same diffusion code $C_k$ (k=1, 2, ---, N) as the diffusion code used on the signal transmission side generated by a diffusion code generating circuit 204 by means of multiplying circuits 206-1, 206-2, ---, 206-N. These multiplying signals are respectively integrated over one symbol interval by integrating circuits 207-1, 207-2, ---, 207-N. Bit 1 or 0 is judged by each of judging circuits 208-1, 208-2, ---, 208-N and is outputted as display data 210, and is sent out to the latch 105 of Fig. 1.

One input of each of the multiplying circuits 206-1, 206-2, ---, 206-N is a multi-valued signal. Accordingly, no exclusive logical sum circuit can be used, and an analog multiplying circuit such as a balance modulating circuit is used. Further, in this portion, all processings after AD conversion can be also digitized as described later.

In this embodiment, when the same diffusion code $C_k$ is not synchronously used on the signal reception side with respect to the diffusion code $C_k$ used on the signal transmission side, no data can be correctly restored on the signal reception side. In the conventional multiplexing communication using the diffusion code, a special circuit for taking the synchronization of diffusion code generation on the signal reception side is required. However, when transmitting and receiving terminals are located at a close distance as in this embodiment, a signal for the synchronization is directly acquired from the signal transmission side. In this embodiment, the same chip clock 211 is used, and diffusion code generating circuits 201, 204 are reset by the horizontal synchronous signal 213, and the synchronization is taken. Synchronization capture can be greatly simplified by taking such a construction. A frequency dividing circuit 205 divides the chip clock 211 in frequency and generates a signal every one symbol interval. The integrating circuits 207-1, 207-2, ---, 207-N and the judging circuits 208-1, 208-2, ---, 208-N are reset. The chip clock 211 is a clock signal of a period corresponding to one chip of the diffusion code, and the frequency of the chip clock 211 is normally raised. Therefore, for example, the horizontal synchronous signal 213 is multiplied on the liquid crystal display body 108 side of Fig. 1 without sending the chip clock 211, and is regenerated by a means of PLL, etc., and may be also multiplied and regenerated on the signal reception side by sending a clock signal every pixel as in the X-clock signal 115.

The one-dotted chain line 215-215' of Fig. 2 is a boundary for separating the main body 131 side and the liquid crystal display body 108 side. A transmission line passing this boundary requires a physical length, and preferable transmission characteristics are required. Therefore, when the number of transmission lines is large, it is difficult to perform execution. In this embodiment, the multiplexing signal 214, the chip clock signal 211, the horizontal synchronous signal 213, etc. are transmitted in the line path transmitted by passing this boundary, and no wide band is required in each line path. Accordingly, the difficulty in the execution is removed and the execution can be easily realized at low cost.

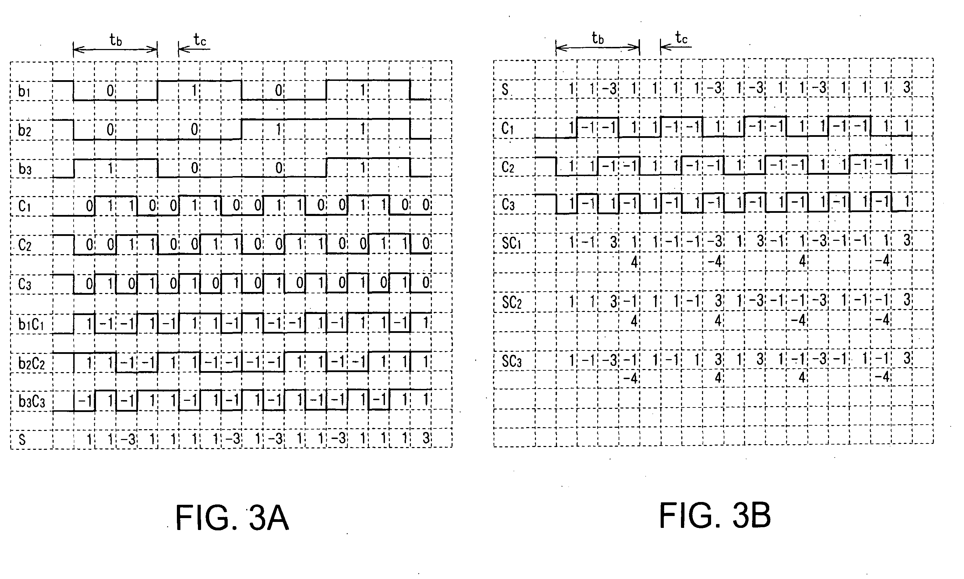

Fig. 3 is a time chart for schematically explaining the operation of the present invention. Fig. 3(a) explains a multiplexing process on the signal transmission side, and Fig. 3(b) shows a restoring process on the signal reception side. Here, for brevity, a multiplexing number is set to 3 in the explanation, but a diffusion code length is actually set to be long and the multiplexing number is set to be considerably large. In this figure, $t_b$ is a symbol interval for transmitting one symbol, and $t_c$ is a chip period, and $t_b/t_c$ is called a diffusion ratio (SF: Spread Factor). Further, $1/t_c$ is a chip frequency.

$b_1$, $b_2$ and $b_3$ of Fig. 3 (a) are display data read out of the video memory 102 in the liquid crystal controller 103. $C_1$, $C_2$, $C_3$ are diffusion codes generated by the diffusion code generating circuit 201, and are respectively multiplied by $b_1$, $b_2$, $b_3$ by the multiplying circuits 202-1, 202-2, ---, 202-N so that $b_1C_1$, $b_2C_2$, $b_3C_3$ are generated. Here, $C_1$, $C_2$, $C_3$ and $b_1$, $b_2$, $b_3$ are illustrated as digital binary signals with logics 1 and 0. Further, $b_1C_1$, $b_2C_2$, $b_3C_3$ are results in which the correspondence of -1 is set at the time of logic 1, and the correspondence of 1 is set at the time of logic 0, and a multiplying operation is performed. It may be also considered that the exclusive logical sum of $b_k$ and $C_k$ is taken, and the correspondence of an analog value -1 is set when the output of this exclusive logical sum is logic 1, and the correspondence of an analog value 1 is set when the output of this exclusive logical sum is logic 0. $b_1C_1$, $b_2C_2$, $b_3C_3$ are analogically added by the adding circuit 203, and a multiplexing signal S is outputted. Namely, $S=b_1C_1+b_2C_2+b_3C_3$ is set and this signal is transmitted to the liquid crystal display body 108 side as the multiplexing signal 214.

On the liquid crystal display body 108 side, as shown in Fig. 3(b), the multiplexing signal S is respectively multiplied by the same diffusion codes $C_1$, $C_2$, $C_3$ as the signal transmission side by means of the multiplying circuits 206-1, 206-2, ---, 206-N so that $SC_1$, $SC_2$, $SC_3$ are generated. The generated $SC_1$, $SC_2$, $SC_3$ are respectively integrated over time $t_b$ by the integrating circuits 207-1, 207-2, ---, 207-N. The respective integrating results are also shown within Fig. 3(b). The judging circuits 208-1, 208-2, ---, 208-N judge logic 0 if the integrating result is a threshold level $V_t$ or more, and also judge logic 1 when the integrating result is the threshold value $V_t$ or less. Thus, the original display data signal 116 can be restored. In this figure, the integrating result is a typical result in an environment having no noises. Accordingly, the integrating result becomes $\pm 4$. However, in an environment in which the orthogonal property of the diffusion code.is bad and there are noises, such clear discrimination cannot be performed. Accordingly, the discrimination is performed by suitably determining $V_t$.

One bit of the signal multiplexed by the diffusion code is transmitted for the time of one symbol interval $t_b$. This shows the same speed as transmission per one signal line when the display data are transmitted in parallel by using plural conventional transmission lines. In the display body of 1920x1080 pixels used in the explanation of the conventional example, an example is given with respect to a case in which 24 bits in total constructed by 8 bits of each of RGB are sent by 60 frames per second. When these 24 bits are multiplexed in this example, each bit is transmitted at a speed of

$$1920 \times 1080 \times 60 \cong 124.4 \ \text{Mbps.}$$

However, each bit is actually diffused SF times for the multiplexing.

It is necessary to set SF to at least 24 or more so as to multiplex and send the 24 bits and perfectly separate the 24 bits on the signal reception side. In consideration of these contents, the chip rate of the diffusion becomes the above SF times, i.e., the same value of about 3 Gcps as the conventional case. Accordingly, it might be considered that there is no effect.

However, in comparison with a case in which all the bits are transmitted as serial data as in the conventional case, a band required on the transmission line is preferably narrow and design is easy in this embodiment. Namely, in the conventional example, with respect to the display data signal, uniform transmission characteristics are required over a very wide frequency band from DC in a black or white case of the entire screen to a highest frequency (about 1.5 GHz in the above example) in the case of a checkered pattern every dot, etc. In contrast to this, in the band required in the case of this embodiment mode, a large part of energy required in transmission is concentrated onto the band of about a symbol frequency vertically located with the chip frequency as a center at most. Therefore, no large ratio band is required on the transmission line. Thus, characteristics required on the transmission line are greatly relaxed and are easily realized. Further, in the conventional example, since one bit is transmitted within one period of about 3 GHz, this one bit is easily interfered between symbols. Further, in the conventional example, a resisting property with respect to reflection, etc. due to bending, mismatch of the transmission line, etc. is weak.

On the other hand, in this embodiment, time for sending one bit is long SF times in comparison with the conventional example. Therefore, the interference between symbols is greatly relaxed even when there is an obstruction due to reflection of the same amount as the conventional example, etc. Further, it is also possible to remove distortion due to such a multi-path by the RAKE technique, etc. as characteristics of the code multiplexing.

As mentioned above, even when the chip rate of a code on the transmission line is the same as a transfer clock frequency in the case of the conventional entire serial transmission, a specification required on the transmission line is greatly relaxed and is easily realized.

Further, in the conventional example, when the displayed display contents show a specific pattern, there is a case in which the display data signal 1816 has a very strong spectrum at a specific frequency. This becomes very disadvantageous from the view point of unnecessary radiation generated from a device, i.e., EMI regulation. However, in accordance with this embodiment, the display data signal 116 is always diffused by the diffusion code. Therefore, no strong spectrum is caused at the specific frequency. There is also an effect in that this is very advantageous from the point of an EMI countermeasure. Further, for example, if the number of multiplexing signal line paths is set to three and the multiplexing is performed every 8 bits of each of R, G and B, the number of 24 display data signal line paths can be reduced to three. Accordingly, the chip frequency of each line path is not raised so much, and might be more realistic.

[Embodiment 2]

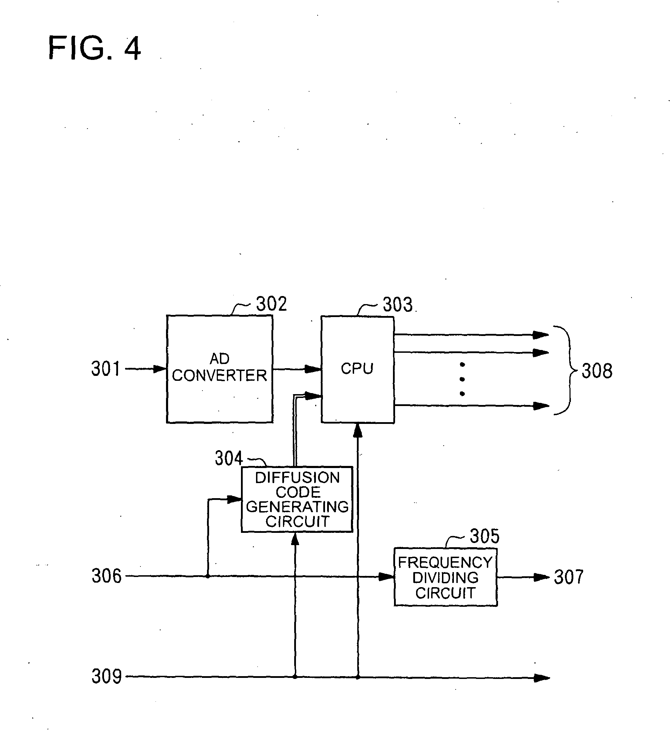

Fig. 4 is a view showing a main portion of another embodiment in accordance with the present invention. Fig. 4 shows another method for restoring the original display data signal 116 from the multiplexing signal 122 in the embodiment 1.

In Fig. 4, the multiplexing signal 122 inputted to a terminal 301 is AD-converted by an AD converter 302, and is converted into a digital signal. A diffusion code generating circuit 304 receives a chip clock inputted to a terminal 306, and generates the same diffusion code as the signal transmission side. A CPU 303 calculates the correlation of the multiplexing signal 122 converted into the digital signal in the AD converter 302, and the diffusion code generated in the diffusion code generating circuit 304. The CPU 303 then restores the display data signal 116 from the multiplexing signal 122, and outputs the display data signal 116 to a terminal 308. The CPU 303 and the diffusion code generating circuit 304 are synchronized by a horizontal synchronous signal 309. A chip clock signal is divided into 1/SF in frequency by a frequency dividing circuit 305, and generates a clock signal 307 (X-clock signal) of an X-shift register.

An analog circuit can be minimized and can be easily mounted to an integrated circuit by taking such a construction. It is sufficient for the AD converter 302 to have 5 bits in resolution at most even when 24-multiplexing is performed, and this AD converter 302 is therefore easily realized.

[Embodiment 3]

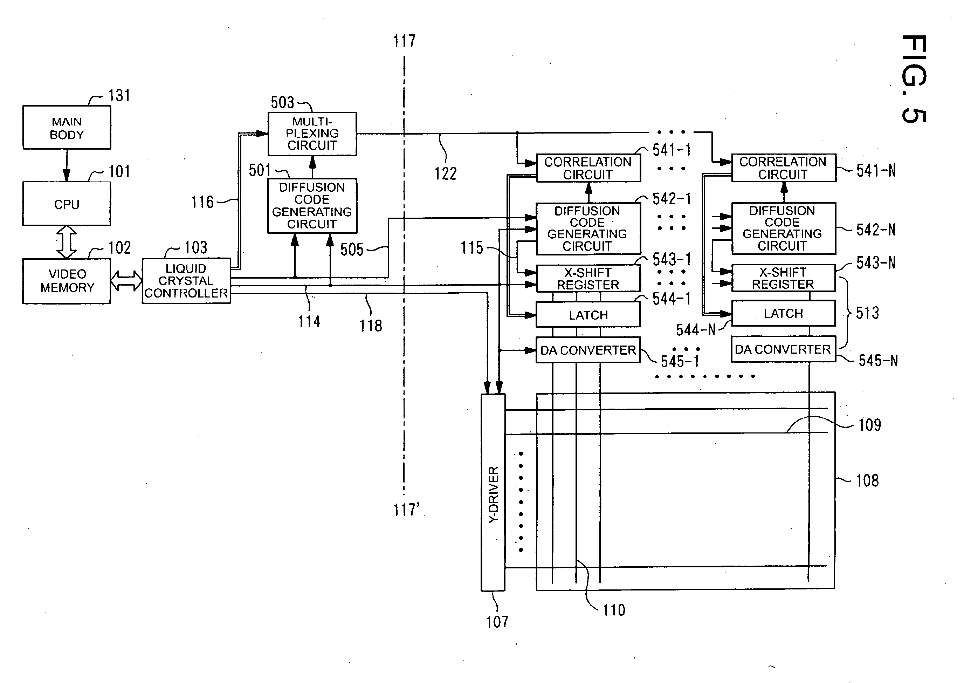

Fig. 5 is a view showing a block diagram of a main portion of still another embodiment of the display device in the present invention. The functions of blocks designated by the same numbers as Fig. 1 are the same as the embodiment 1, and their explanations are therefore omitted.

In Fig. 5, an X-driver 513 is divided into N sets, and is respectively constructed by X-shift registers 543-1, ---, 543-N, latches 544-1; ---, 544-N, and DA converters 545-1, ---, 545-N. The X-driver 513 and a Y-driver 107 are normally divided into plural portions, and are arranged within an integrated circuit and are longitudinally connected and used. In the division into the N-sets, it may be considered as this driver integrated circuit unit, and plural sets may also exist in one driver integrated circuit. Conversely, one set can be also constructed by plural integrated circuits. In each set of the X-driver 513, correlation circuits 541-1, ---, 541-N and diffusion code generating circuits 542-1, --- 542-N are assembled every set. In each set of the X-driver 513, a diffusion code set $S_p=\{C_{pk}\}$(p=1, 2, ---, N) proper to each set is allocated. The diffusion code generating circuits 542-1, --- 542-N generate this allocated diffusion code set. Namely, the diffusion code generating circuit 542-p of a P-th set generates each code of the code set $S_p$. The correlation between the diffusion code sets of each set is designed so as to be small. Further, the correlation between the respective codes within the code set is also designed so as to be small. It is ideal to set the correlation to be perfectly zero in each case. Namely, it is ideal to use an orthogonal code system.

The display data of column q (q=1, 2, ---, n/N) of the p-th set (p=1, 2, ---, N) are set to Dpq for the following explanation. Dpq has information relating to a color and gradation, and is namely constructed by plural bits as every 8 bits in each of RGB. A k-th bit of each $D_{pq}$ is set to $b_k$.

The diffusion code generating circuits 542-1,-542-N of the X-driver 513 side generate only code sets allocated to a self set. In contrast to this, the diffusion code generating circuit 501 of the signal transmission side generates all diffusion code sets used in accordance with necessity. A liquid crystal controller 103 reads displayed display data from a video memory 102, and outputs the display data to a multiplexing circuit 503. The multiplexing circuit 503 selects the diffusion code set on the basis of whether a pixel for displaying these display data is operated by the X-driver 513 of which set. The multiplexing circuit 503 then multiplexes a display data signal 116 by its diffusion code set, and generates a multiplexing signal 122. Namely, the display data signal 116 sent out to the X-driver 513 of the p-th set is multiplexed by the code set Sp. On the signal reception side of this signal, i.e., in each set of the X-driver 513, only the diffusion code of a self set is generated with respect to the diffusion code, and no display data signal 116 sent out to another set can be restored. Accordingly, a going destination of the display data signal 116 can be correctly determined. In the display of an image, the correlations between scanning lines and between frames are large, and there are many cases in which it is not necessary to update the display data signal 116 previously transmitted. The liquid crystal controller 103 compares the display data on the scanning line located by one before, and the display data intended to be sent out this time, and sends out the display data to only a set having a different portion of the display data. On the liquid crystal display body 108 side, it is judged that there is no necessity of a change in the display data signal 116 in a set unable to detect the display data signal 116 by the correlation circuits 541-1, ---, 541-N. The operations of the X-shift registers 543-1, ---, 543-N, the latches 544-1, ---, 544-N and the DA converters 545-1, ---, 545-N belonging to this set are stopped, and no output is changed and the display data on the scanning line located by one before are continuously outputted. Thus, since the display data sending-out operation to a set unnecessary to be updated can be stopped, the electric power consumption of a device can be greatly reduced.

Namely, the sending destination of the display data signal 116 is addressed by the diffusion code every set by taking the above construction. Accordingly, the sending destination of the display data signal 116 can be designated by changing the diffusion code. Therefore, data transmission is stopped by this construction in this embodiment with respect to a set unnecessary to rewrite the display data signal 116, and electric power consumption can be reduced.

Further, as the number (i.e., N) of sets of the X-driver 513 is increased, control of the transmission/stoppage of the display data signal 116 can be finely executed, and the effect of electric power consumption formation is also increased. When N is most increased, N=n (transversal pixel number) is set. However, when N is excessively increased, there is the trade off that the code length is lengthened and the arithmetic amount of multiplexing/restoration is increased.

In a sending-out order of the display data signal 116, each bit $b_k$ (k=1, 2, ---) may be multiplexed from left to right every pixel as in On, $D_{12}$, ---, $D_{1N}$, $D_{21}$, $D_{22}$, ---, $D_{2N}$, ---. Further, the bits may be multiplexed and sent out every bit such that each $b_1$ of $D_{11}$, $D_{21}$, ---, $D_{N1}$ is multiplexed and each $b_2$ is subsequently multiplexed. After the multiplexing and sending-out operations are terminated with respect to a first pixel, $b_1$ of a second pixel, i.e., $D_{22}$, $D_{22}$, ---, $D_{N2}$ may be multiplexed and $b_2$ may be also subsequently multiplexed. Each set and each bit can be addressed by the diffusion code. Accordingly, the sending-out order can be arbitrarily changed. In the former method, there is an advantage able to send out the display data signal 116 read out of the video memory 102 without any rearrangement. However, a period of no signal with respect to a set unnecessary to update data exists. Therefore, a bit transfer rate is high. In the latter method, the liquid crystal controller 103 reads out data of a pixel every set, and once stores these pixel data and must rearrange and output these pixel data every bit. However, the transfer speed per bit can be lowered.

[Embodiment 4]

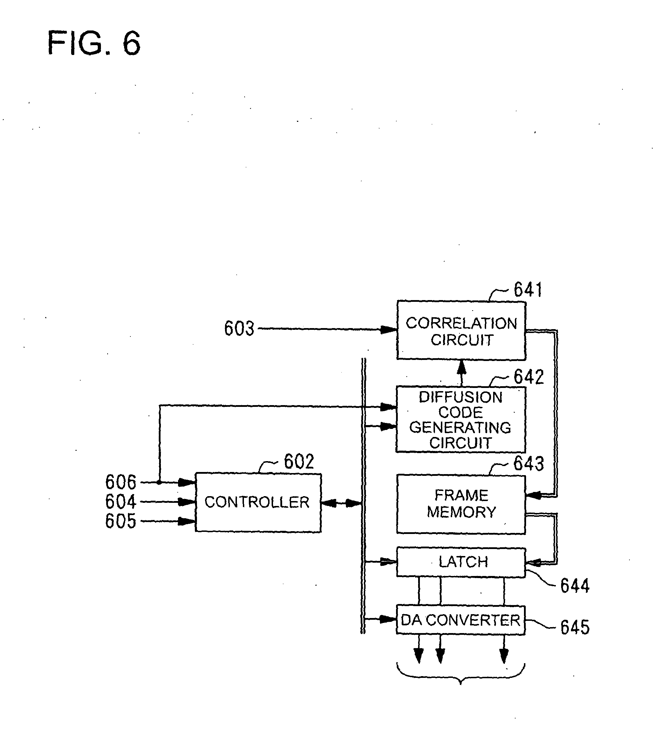

Fig. 6 is a view for explaining still another embodiment in the present invention. In Fig. 5, portions corresponding to each set of the X-driver 513, the correlation circuits 541-1, ---, 541-N and the diffusion code generating circuits 542-1, --- 542-N are replaced as shown in Fig. 6. Only one set is shown in Fig. 6.

In this embodiment, a frame memory 643 is arranged on the liquid crystal display body 108 side to reduce the transfer of the display data signal 116 by utilizing the correlation between frames of a display image. When the display is at rest, no display data signal 116 is transferred and data stored to the frame memory 643 are utilized.

An explanation will next be made by replacing portions of the X-driver 513, etc. of Fig. 5 with the construction of Fig. 6.

In Fig. 5, when the contents of the video memory 102 are rewritten in the liquid crystal controller 103, these contents are multiplexed in the multiplexing circuit 503 by using a diffusion code set allocated to a set having a pixel for displaying the rewritten data, and are sent out to the liquid crystal display body 108 side (a terminal 603 of Fig. 6) as the multiplexing signal 122.

The liquid crystal controller 103 can detect that the video memory 102 is rewritten by the CPU 101 by monitoring control (a write pulse and an address pulse of the video memory 102) from the CPU 101 to the video memory 102. In expansion of MPEG, etc., the CPU 101 can also detect a portion requiring the rewriting every frame from its compression expansion algorithm.

The CPU 101 may directly inform the liquid crystal controller 103 of the rewriting portion which has been detected in this way. In Fig. 5, a signal path for this information is omitted. The liquid crystal controller 103 then sends out only the display data signal 116 of the pixel performed with respect to the rewriting in synchronization with the generated vertical synchronous signal 118 and horizontal synchronous signal 114.

Here, the display data signal 116 may be sent out every rewriting in the video memory 102. However, the rewriting to the video memory 102 of the CPU 101 is normally performed considerably rapidly in comparison with timing requiring the display data on the liquid crystal display body 108 side. Therefore, it is more preferable to send out the display data signal just before the liquid crystal display body 108 requires the display data in synchronization with the horizontal synchronous signal 114 and the vertical synchronous signal 118.

A very long diffusion code is required to address all the pixels by addressing using the diffusion code. Therefore, for example, a row address, a pixel address of the X-direction within a set, etc. are calculated from timing from the synchronous signals by sending out data in synchronization with the synchronous signals. Thus, the number of address bits to be designated is reduced and an operation in a short diffusion code can be preferably performed.

The correlation circuit 641 built in each set of the X-driver 513 of the liquid crystal display body 108 side calculates the diffusion code set allocated to the self set and the correlation, and restores the display data signal 116 sent out to the self set, and stores the display data signal 116 to the frame memory 643. When such display data generated by the liquid crystal controller 103 are not sent, the previous data are stored without updating the display data used in the display of the previous frame stored to the frame memory 643.

A controller 602 takes the synchronization of a diffusion code generating circuit 642 in synchronization with a chip clock 505 inputted to a terminal 606 and the horizontal synchronous signal 114 and the vertical synchronous signal 118 respectively inputted to terminals 604, 605. The controller 602 also controls the operations of a latch 644 and a DA converter 645 in conformity with the operation of the liquid crystal display body 108 by controlling timing. Namely, the latch 644 reads the display data on a scanning line to be next displayed from the frame memory 643 in conformity with timing outputted from the controller 602, and holds these display data. When the next horizontal synchronous signal 114 is inputted, the controller 602 starts the DA converter 645 and outputs and displays a driving voltage in the liquid crystal display body 108 in accordance with data held in the latch 644.

In the above embodiment, the method using the frame memory 643 is explained to hold data displayed in the previous frame. However, the frame memory 643 can be also omitted when the pixel itself has this holding function by capacitance, etc. every pixel of the liquid crystal display body 108.

In accordance with the above construction in this embodiment, various difficulties in the transmission of the display data including a very high frequency component and requiring high speed data transmission can be reduced in the display device. Since a signal can be multiplexed by the diffusion code, the number of line paths required in the transmission can be reduced. Further, it is possible to narrow a frequency band included in the display data, and the line path can be easily designed. Further, the display data are also diffused in frequency by the diffusion code in the display of an image pattern in which a strong spectrum peak appears at a spatial frequency. Therefore, no strong spectrum peak appears at a specific frequency. Thus, there is a great effect in the EMI countermeasure. Further, since data can be addressed by the diffusion code, a sending destination of the data can be designated without a special addressing means. Thus, the data transfer from the video memory 102 to the liquid crystal display body 108 can be performed only when display contents are changed. Accordingly, there is a great effect in a reduction in electric power consumption of the display device.

[Embodiment 5]

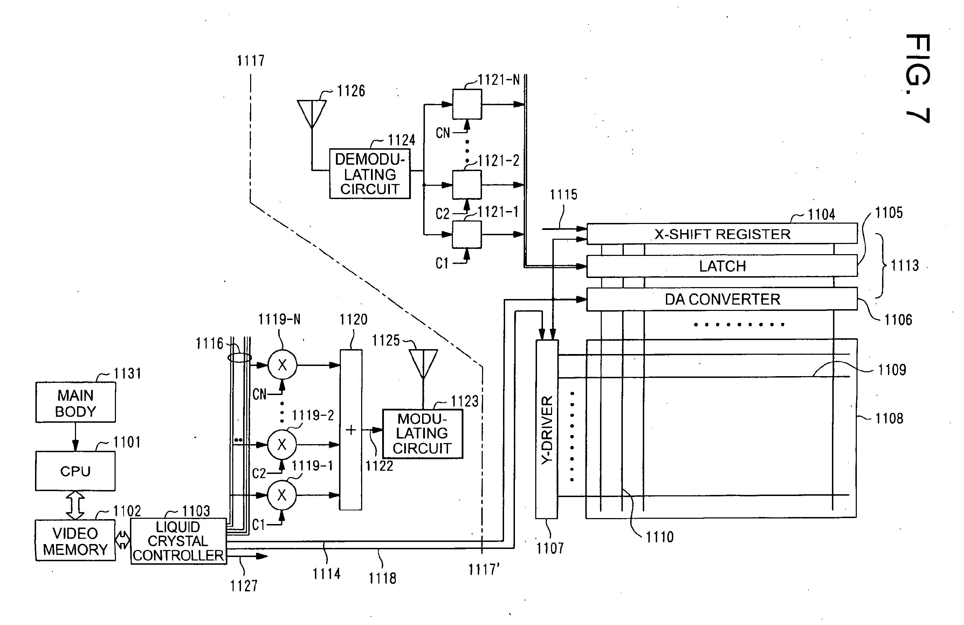

Fig. 7 is a view showing a main portion of an embodiment of the display device in the present invention. Fig. 7 illustrates a typical block diagram of the display device using an active matrix type liquid crystal display body as a display element.

As shown in Fig. 7, a CPU 1101 generates image data to be displayed in accordance with instructions of a main body section 1131, and writes the image data into a video memory 1102. Here, the main body section 1131 means a main body circuit including a tuner and a demodulating section in a television and a main body section including a DVD player regenerating section, etc., an input-output device of a computer, etc. The CPU 1101 receives a signal of the main body section 1131, and generates image data to be displayed by expansion and an arithmetic operation from its image signal, a compression image of JPEG, MPEG, etc. and dynamic image data. The CPU 1101 then stores these image data to the video memory 1102 and sequentially rewrites and updates these image data in accordance with necessity. A liquid crystal controller 1103 generates various kinds of timings required in the liquid crystal display, i.e., a chip clock signal 1127 of a diffusion code, a horizontal synchronous signal 1114 and a vertical synchronous signal 1118. The liquid crystal controller 1103 also reads out the display data along an order to be displayed from the video memory 1102. At this time, the display data are read out of the video memory 1102 as serial data of bit parallel every pixel, and are outputted as a display data signal 1116.

Here, multiplying circuits 1119-1, 1119-2, ---, 1119-N corresponding to respective bits of the display data are arranged on the main body section 1131 side. A diffusion code $C_k$ (k=1, 2, ---, N) is supplied to each of the multiplying circuits 1119-1, 1119-2, ---, 1119-N. Each bit of this display data signal 1116 is multiplied by the diffusion code $C_k$ (k=1, 2, ---, N) in each of the multiplying circuits 1119-1, 1119-2, ---, 1119-N, and is analogically added by an adding circuit 1120. Each bit is then modulated by a modulating circuit 1123 as a multiplexing signal 1122, and is sent out to the liquid crystal display body 1108 side as an electromagnetic wave (radio wave) signal by a transmission antenna 1125.

Here, correlation circuits 1121-1, 1121-2, ---, 1121-N corresponding to the respective bits of the display data are arranged on the liquid crystal display body 1108 side. The diffusion code $C_k$ (k=1, 2, ---, N) is supplied to each of the correlation circuits 1121-1, 1121-2, ---, 1121-N. On the liquid crystal display body 1108 side, the electromagnetic wave signal received by a reception antenna 1126 is demodulated to a multiplexing signal 1122 by a demodulating circuit 1124. With respect to the demodulated multiplexing signal 1122, the correlation of the same diffusion code $C_k$ (k=1, 2, ---, N) as the diffusion code multiplied on the signal transmission side is calculated in each of the correlation circuits 1121-1, 1121-2, ---, 1121-N. The multiplexing signal 1122 is then restored to serial data of bit parallel every pixel, and is sent out to a latch 1105. The restoration of the multiplexing signal 1122 can be also realized by a method using a matching filter, etc. When the matching filter is used, a synchronous procedure with the diffusion code can be simplified.

Here, each diffusion code $C_k$ (k=1, 2, ---, N) is a time function changed in a time unit called a chip period $t_c$, and is used by selecting a code having a low correlation between different diffusion codes. Namely, the value of i-th $C_k$ is set to $C_k(i)$ with $t_c$ as a unit, and arbitrary two kinds of diffusion codes $C_k$, $C_k$, are set. When the following calculation is executed,

$$R = \sum C_k(i) C_{k'}(i)$$

i.e., when the calculation of the correlation is executed (the sum total is set so as to be calculated over one symbol interval) and k and k' are different, the diffusion codes $C_k$, $C_k$, are set so as to set the absolute value of R to a value close to zero. When R=0 is set, it is called that the diffusion codes $C_k$, $C_k$, of these two kinds are orthogonal. When the orthogonal diffusion codes $C_k$, $C_k$, are used, the multiplexing signal 1122 can be perfectly separated on the signal reception side.

When the pixels of the liquid crystal display body 1108 are constructed by n rows and m columns, an X-driver 1113 is constructed from X-shift registers 1104 of m-stages, latches 1105 of m-words and m DA converters 1106. These X-shift registers 1104 of m-stages, the latches 1105 of m-words and the m DA converters 1106 are normally divided into plural sets and are integrated onto a semiconductor integrated circuit, and are arranged around the liquid crystal display body 1108. When the lead pixel of a display frame is read out, the liquid crystal controller 1103 generates the vertical synchronous signal 1118 and sends out this vertical synchronous signal 1118 to a Y-driver 1107. At this time, data displayed in the pixel of a first row and a first column are simultaneously restored as parallel data every pixel by the correlation circuits 1121-1, 1121-2, ---, 1121-N, and are latched to the latch 1105. A read clock of the latch 1105 generated by the X-shift register 1104 is next shifted and latched in the column direction every time an X-clock signal 1115 is sequentially inputted. (A generating method of the X-clock signal 1115 will be described later.)

For example, the display data signal 1116 conventionally has 8 bits in each of RGB every pixel, and these bits are transmitted as parallel data of 24 bits in parallel by using 24 transmission lines, or are transmitted at a transmission rate of 24 times after parallel serial conversion.

On the other hand, in accordance with this embodiment, the display data signal 1116 is code-multiplexed as the multiplexing signal 1122 and is propagated in a space as an electromagnetic wave signal. In this example, all the 24 bits are multiplexed to one line, but may be also multiplexed every e.g., 8 bits and may be set to three channels, and may be also transmitted by using e.g., different frequencies. In such a case, such a construction can be also realized without increasing the size of a generating/restoring circuit of the electromagnetic wave signal so much. Further, even when all the 24 bits are multiplexed to one line, it should be noted that the transmission rate per each bit line of the display data signal 1116 is the same as a conventional case drawing the 24 signal lines, and is not raised to 24 times as in multiplexing using the parallel serial conversion.

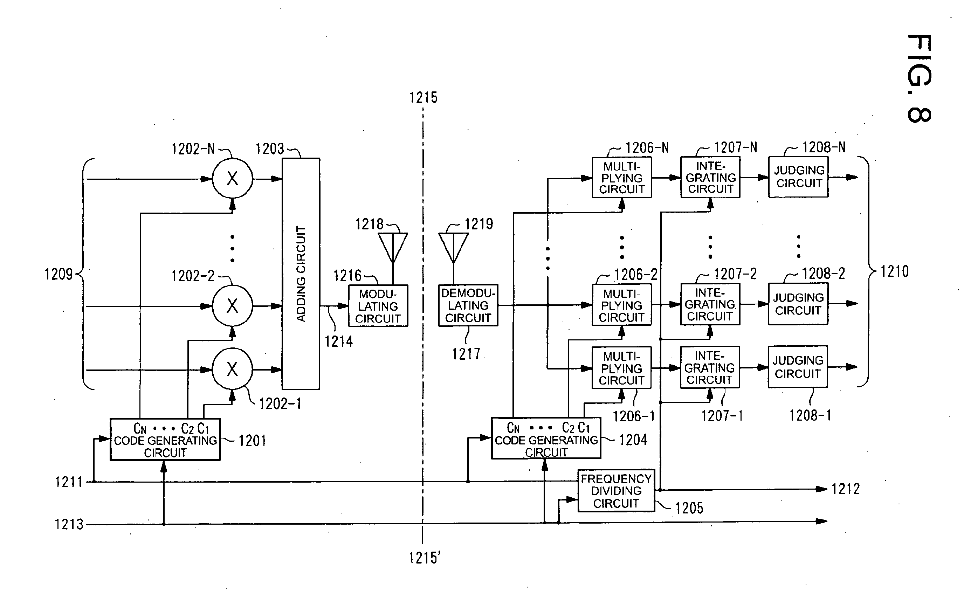

Fig. 8 is a view for explaining in more detail an example of the multiplexing and its restoration of the display data signal 1116 in Fig. 7, and portions of the multiplying circuits 1119-1, 1119-2, ---, 1119-N, the adding circuit 1120 and the correlation circuits 1121-1, 1121-2, ---, 1121-N of the display device in the present invention. Fig. 8 also explains the generating method of the X-clock signal 1115.

In Fig. 7, the display data signal 1116 read out by the liquid crystal controller 1103 is changed into bit parallel every pixel, and is outputted to a terminal 1209 of Fig. 8. Each bit of the display data signal 1116 is multiplied by each diffusion code $C_k$ (k=1, 2, ---, N) generated by a diffusion code generating circuit 1201 in each of multiplying circuits 1202-1, 1202-2, ---, 1202-N and is analogically added by an adding circuit 1203. Each bit is then sent to a modulating circuit 1216 as a multiplexing signal 1214 and is sent out to the liquid crystal display body 1108 side as an electromagnetic wave signal from a transmission antenna 1218. The inputs of the multiplying circuits 1202-1, 1202-2, ---, 1202-N are digital binary values. If the diffusion code $C_k$ is also binary, the multiplying circuits 1202-1, 1202-2, ---, 1202-N can be constructed by an exclusive logical sum circuit. Since the output of the adding circuit 1203 becomes multi-valued, an analog adding calculation is required. The correspondence of -1 V is set at the time of output logic 1 of the multiplying circuits 1202-1, 1202-2, ---, 1202-N, and the correspondence of 1 V is set at the time of logic 0, and the analog adding calculation is made.

On the liquid crystal display body 1108 side, the multiplexing signal 1122 using the electromagnetic wave transmitted from the transmission antenna 1218 is received by a reception antenna 1219, and the multiplexing signal is restored by a demodulating circuit 1217. The restored multiplexing signal is multiplied by each of the same diffusion code $C_k$ (k=1, 2, ---, N) as the diffusion code used on the signal transmission side and generated by a diffusion code generating circuit 1204 by means of each of multiplying circuits 1206-1, 1206-2, ---, 1206-N. These signals are respectively integrated over one symbol interval by integrating circuits 1207-1, 1207-2, ---, 1207-N, and bit 1 or 0 is respectively judged by judging circuits 1208-1, 1208-2, ---, 1208-N. These signals are then outputted as display data 1210 and are sent out to the latch 1105 of Fig. 7.

In the multiplying circuits 1206-1, 1206-2, ---, 1206-N, one input is a multi-valued signal so that no exclusive logical sum circuit can be used. Therefore, an analog multiplying circuit such as a balance modulating circuit is used. Further, this portion may be also processed by digitizing all processings after AD conversion.

In this embodiment, when the same diffusion code $C_k$ is not synchronously used on the signal reception side with respect to the diffusion code $C_k$ used on the signal transmission side, no data can be correctly restored on the signal reception side. In the conventional multiplexing communication using the diffusion code, a special circuit for taking the synchronization of diffusion code generation is required on the signal reception side. However, when transmitting and receiving terminals are located at a close distance as in this embodiment, a signal for the synchronization is directly received from the signal transmission side. Therefore, in this embodiment, the same chip clock 1211 is used, and diffusion code generating circuits 1201, 1204 are reset by a horizontal synchronous signal 1213 and the synchronization is taken. Synchronous capture can be greatly simplified by taking such a construction. A frequency dividing circuit 1205 divides the chip clock 1211 in frequency and transmits a signal every one symbol interval, and resets the integrating circuits 1207-1, 1207-2, ---, 1207-N and the judging circuits 1208-1, 1208-2, ---, 1208-N. In this case, since the output 1212 of the frequency dividing circuit 1205 is set at one symbol interval, this output 1212 has the same period and the same phase as the X-clock signal 1115, and this signal can be used as the X-clock signal 1115. The chip clock 1211 is a clock signal of a period corresponding to one chip of the diffusion code, and the frequency of the chip clock 1211 normally becomes high. Accordingly, for example, the horizontal synchronous signal 1213 is multiplied on the liquid crystal display body 1108 side without sending the chip clock 1211, and is regenerated by a means of PLL, etc. Further, the clock signal every pixel such as the X-clock signal 1115 may be also sent and multiplied and regenerated on the signal reception side.

A one-dotted chain line 1215-1215' is a boundary for separating the main body section 1131 side and the liquid crystal display body 1108 side. A transmission line passing this boundary requires a physical length, and preferable transmission characteristics are required. Therefore, it was difficult to execute this transmission line in the prior art. In this embodiment, the chip clock 1211, the horizontal synchronous signal 1213, etc. are transmitted in the line path transmitted by passing this boundary, and a high speed property and a wide band are not required in each line path. Further, the display data signal 1116 requiring a highest speed wide band is transmitted by an electromagnetic wave. Accordingly, it is possible to remove various difficulties in the conventional high speed data transmission. Further, the multiplexing is performed by the diffusion code and the transmission can be performed without raising the transmission rate.

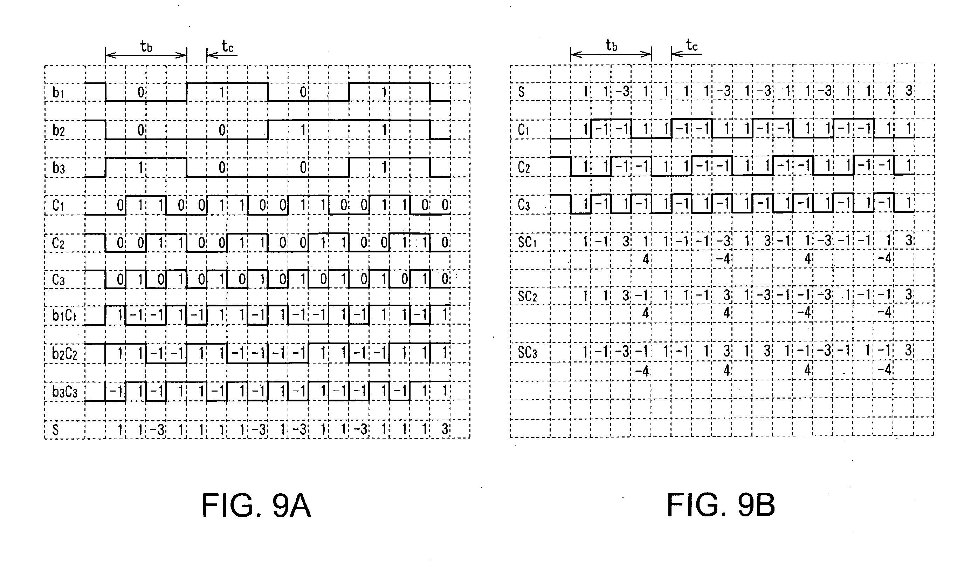

Fig. 9 is a time chart for schematically explaining the operation of the present invention. Fig. 9(a) explains a multiplexing process on the signal transmission side, and Fig. 9(b) shows a restoring process on the signal reception side. Here, for brevity, the explanation is made by setting the multiplexing number to 3, but the diffusion code length is actually lengthened and the multiplexing number is set to be considerably large. In Fig. 9, time $t_b$ shows a symbol interval for transmitting one symbol, and time $t_c$ shows a chip period, and $t_b/t_c$ is called a diffusion ratio (SF: Spread Factor). Further, $1/t_c$ is a chip frequency.

$b_1$, $b_2$ and $b_3$ of Fig. 9(a) are display data read out of the video memory 1102 by the liquid crystal controller 1103. $C_1$, $C_2$, $C_3$ are diffusion codes generated by the diffusion code generating circuit 1201, and are respectively multiplied by $b_1$, $b_2$, $b_3$ by the multiplying circuits 1202-1, 1202-2, ---, 1202-N so that $b_1C_1$, $b_2C_2$, $b_3C_3$ are generated. Here, $C_1$, $C_2$, $C_3$ and $b_1$, $b_2$, $b_3$ are illustrated as a digital binary signal with logics 1 and 0. Further, $b_1C_1$, $b_2C_2$, $b_3C_3$ are results in which the correspondence of an analog value -1 is set at the time of logic 1, and the correspondence of an analog value 1 is set at the time of logic 0, and the multiplying operation is performed. It may be also considered that the exclusive logical sum of $b_k$ and $C_k$ is calculated, and the correspondence of the analog value -1 is set when the output of the exclusive logical sum is logic 1, and the correspondence of the analog value 1 is set when this output is logic 0. $b_1C_1$, $b_2C_2$, $b_3C_3$ are analogically added by the adding circuit 1203 and S is outputted. Namely, $S=b_1C_1+b_2C_2+b_3C_3$ is set, and this signal is modulated as the multiplexing signal 1214 by a modulating circuit 1216, and is then transmitted to the liquid crystal display body 1108 side through the transmission antenna 1218.

On the liquid crystal display body 1108 side, as shown in Fig. 9(b), a signal received by the reception antenna 1219 is demodulated by the demodulating circuit 217. This demodulated multiplexing signal S is multiplied by each of the same diffusion codes C1, C2, C3 as the signal transmission side by the multiplying circuits 1206-1, 1206-2, ---, 1206-N so that $SC_1$, $SC_2$, $SC_3$ are generated. The generated $SC_1$, $SC_2$, $SC_3$ are then respectively integrated over the time $t_b$ by the integrating circuits 1207-1, 1207-2, ---, 1207-N. Each integrated result is also shown within Fig. 9(b). The judging circuits 1208-1, 1208-2, ---, 1208-N judge logic 0 if the integrated result shows a threshold level $V_t$ or more, and also judge logic 1 if the integrated result shows the threshold level $V_t$ or less. Thus, the original display data signal 1116 can be restored. Since Fig. 9 shows a typical data signal in an environment having no noises, the integrated result becomes $\pm 4$. However, in an environment in which the orthogonal property of the diffusion code is bad and there are noises, such clear discrimination cannot be performed. Accordingly, the discrimination is performed by suitably determining the threshold level $V_t$.

One bit of the signal multiplexed by the diffusion code is transmitted for the time of one symbol interval $t_b$. This shows the same speed as transmission per one signal line when the display data signal 1116 is transmitted in parallel by using plural conventional transmission lines. An example will be given with respect to a case in which 24 bits in total constructed by 8 bits of each of RGB in the liquid crystal display body 1108 of 1920x1080 pixels used in the explanation of the conventional example are sent by 60 frames per second. When these 24 bits are multiplexed, each bit is transmitted at a speed of

$$1920 \times 1080 \times 60 \cong 124.4 \text{ Mbps.}$$

However, each bit is actually diffused to SF times for the multiplexing. It is necessary to set SF to at least 24 or more so as to multiplex and send the 24 bits and perfectly separate the 24 bits on the signal reception side. In consideration of these contents, the chip rate of the diffusion becomes the above SF times, i.e., the same value of about 3 Gcps (chip per second) as the conventional case. Accordingly, it might be considered that there is no effect. When the orthogonal property and accuracy of the diffusion code are considered, it is necessary to transmit a signal at higher cps.

However, this is conversely advantageous when the display data signal 1116 is transmitted by an electromagnetic wave as in this embodiment. The degree of freedom of a chip rate selection is increased and the frequency of the radiated electromagnetic wave can be raised to a certain extent so that the transmission as the electromagnetic wave is more easily performed.

Further, in comparison with a case for transmitting all data as serial data as in the conventional case, design is easier in this embodiment since a band required on a transmission line is preferably narrow. Namely, in the conventional example, uniform transmission characteristics are required in the display data signal 1816 over a very wide frequency band from DC in a black or white case of the entire screen to a highest frequency (about 1.5 GHz in the above example) in the case of a checkered pattern, etc. every dot. In contrast to this, in the band required in the case of this embodiment, a large part of energy required in the transmission is concentrated onto the band of about a symbol frequency above and below with the chip frequency as a center at most. Therefore, no large ratio band is required on the transmission line. This greatly relaxes the characteristics required on the transmission line, and easily realizes these characteristics.

Further, in the conventional example, since one bit is transmitted within one period of about 3 GHz, the interference between symbols is easily caused and a resisting property with respect to bending of the transmission line, reflection, etc. due to mismatch, etc. is weak. On the other hand, in this embodiment, time for sending one bit is long SF times in comparison with the conventional example. Therefore, even when there is an obstruction due to the reflection of the same amount as the conventional example, etc., the interference between symbols is greatly relaxed. Further, it is also possible to remove distortion due to a multi-path in propagation in a space as characteristics of code multiplexing by the RAKE technique, etc.

As mentioned above, even when the chip rate of a code on the transmission line is higher than a transfer clock frequency in the case of the conventional entire serial transmission, a specification required on the transmission line is greatly relaxed and easily realized. Further, in the conventional example, when the displayed display contents are a specific pattern, there is a case in which the display data signal 1816 has a very strong spectrum at a specific frequency. This is very disadvantageous from the view point of unnecessary radiation generated from a device, i.e., the EMI regulation. However, in accordance with this embodiment, the display data signal is always diffused by the diffusion code. Therefore, no strong spectrum is caused at the specific frequency, and there is also the effect that this becomes great advantageous from the point of the EMI countermeasure.

Further, when a signal is transmitted by a wired line path as in the conventional case, it is necessary to operate the signal together with floating capacity of the line path, and there is the essential problem that electric power consumption is increased as the frequency of the signal is raised. On the other hand, in this embodiment, since a signal is propagated in a space by an electromagnetic wave, the signal is easily radiated as the electromagnetic wave as the frequency is raised. Further, electric power of the signal transmission side can be reduced until a level able to receive the signal on the signal reception side. Accordingly, there is an effect for greatly reducing electric power consumption.

[Embodiment 6]

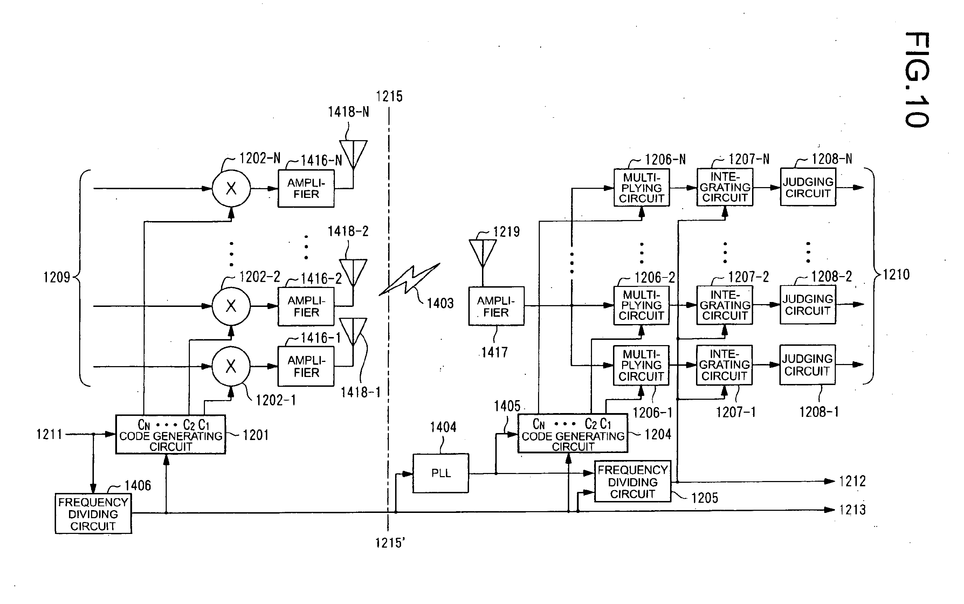

Fig. 10 is a view showing a main portion of another embodiment in the present invention. Fig. 10 shows an example in which another method is taken as the construction of the adding circuit 1203, the modulating circuit 1216 and the demodulating circuit 1217 shown in Fig. 8 in the embodiment 5. Fig. 10 also shows another example of the generating method of the chip clock and the X-clock signal. In Fig. 10, blocks having the same functions as blocks shown in Fig. 8 are designated by the same reference numerals, and their explanations are omitted if no explanations are particularly required.

In Fig. 10, transmission antennas 1418-1, 1418-2,--, 1418-N are arranged correspondingly to respective bits of a display data signal 1116. The transmission antennas 1418-1, 1418-2, ---, 1418-N are respectively connected to multiplying circuits 1202-1, 1202-2, ---, 1202-N through amplifiers 1416-1, 1416-2, ---, 1416-N.

The respective amplifiers 1416-1, 1416-2, ---, 1416-N respectively receive and amplify signals of the multiplying circuits 1202-1, 1202-2, ---, 1202-N, and supply electricity to the transmission antennas 1418-1, 1418-2, ---, 1418-N. It is possible to set the amplifiers 1416-1, 1416-2, ---, 1416-N to have a function for reducing transmission electric power until a minimum level able to secure an SN ratio required on the signal reception side. A signal transmission level may be also controlled on the basis of a signal receiving result from the signal reception side. Further, if there is a margin in output driving ability of the multiplying circuits 1202-1, 1202-2, ---, 1202-N, the amplifiers 1416-1, 1416-2, ---, 1416-N may be omitted and electricity may be also directly supplied to the transmission antennas 1418-1, 1418-2, ---, 1418-N.

Further, in this embodiment, the amplifiers 1416-1, 1416-2, ---, 1416-N are arranged in the position of the modulating circuit 1216 in the embodiment 5. The multiplying circuits 1202-1, 1202-2, ---, 1202-N can function as the modulating circuit 1216 by adjusting the code length of the diffusion code in this way and setting the chip frequency so as to become a predetermined desirable frequency band and using this chip frequency. When such a circuit construction is taken, the frequency spectrum of an output signal of each of the multiplying circuits 1202-1, 1202-2, ---, 1202-N becomes a convolution integral of display data inputted to a terminal 1209 and the frequency spectrum of the diffusion code. When the diffusion code is well selected, it is possible to generate an electromagnetic wave signal in which the spectrum is concentrated onto the range of a $\pm$ symbol rate with 1/2 of the chip frequency as a center. Thus, a circuit can be simplified.

Further, in comparison with the embodiment 5, the adding circuit 1120 is omitted but a signal is added in a space and becomes a multiplexing signal 1403 using an electromagnetic wave. In this case, it is necessary to set each of the transmission antennas 1418-1, 1418-2, ---, 1418-N to have a wavelength sufficiently close to the wavelength of the chip frequency. When antennas of the same constant are located at a close distance, there is mutually an influence. However, there is no influence that an obstacle is caused in communication at the close distance. The electromagnetic wave signal transmitted by each of the transmission antennas 1418-1, 1418-2, ---, 1418-N is added in a space and becomes a multiplexing signal 1403, and is received by a reception antenna 1219. An amplifier 1417 amplifies the signal received by the reception antenna 1219 until a required level, and transmits this signal to multiplying circuits 1206-1, 1206-2, ---, 1206-N. The amplifier 1417 then restores the display data signal 1116 by an operation similar to that in the embodiment 5, and outputs this display data signal 1116 to a terminal 1210.

A clock is supplied to a code generating circuit 1201 by a chip clock 1211 and a diffusion code is generated. A frequency dividing circuit 1406 divides the frequency of the chip clock 1211 and also generates a horizontal synchronous signal 1213. This signal is transmitted to the liquid crystal display body 1108 side by wire. The horizontal synchronous signal 1213 has a sufficient low frequency in comparison with the display data signal 1116, etc., and there is only one horizontal synchronous signal 1213 so that wiring is easy. On the liquid crystal display body 1108 side, the horizontal synchronous signal 1213 is multiplexed by a PLL 1404, and a chip clock 1405 of the same phase and the same frequency as the chip clock 1211 used on the signal transmission side is generated and sent to a code generating circuit 1204, and the diffusion code of the signal reception side is generated. The chip clock 1405 is also divided by the frequency dividing circuit 1205 in frequency, and an X-clock signal 1212 is generated. The X-clock signal 1212 is also used to reset integrating circuits 1207-1, 1207-2, ---, 1207-N.

The number of lines for connecting the liquid crystal display body 1108 side and the main body section 1131 side can be reduced by taking such a construction. Further, since a signal transmitted by its wired line has a low frequency, this construction is easily realized. Furthermore, it is possible to solve various problems at a stretch in high speed large amount data transmission which conventionally becomes a problem.

[Embodiment 7]

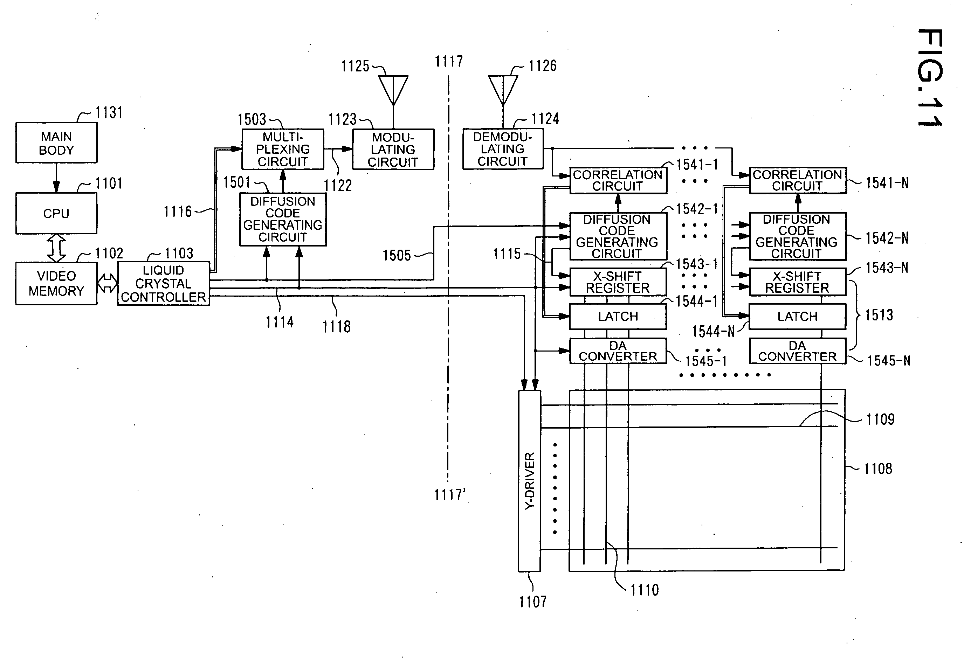

Fig. 11 is a view showing a block diagram of a main portion of still another embodiment of the display device in the present invention. The functions of blocks designated by the same numbers as Fig. 7 are the same as the embodiment 5, and their explanations are therefore omitted.

In Fig. 11, an X-driver 1513 is divided into N-sets, and is respectively constructed by X-shift registers 1543-1, ---, 1543-N, latches 1544-1, ---, 1544-N and DA converters 1545-1, ---, 1545-N. The X-driver 1513 and a Y-driver 1107 are normally divided into plural portions, and are arranged in an integrated circuit, and are longitudinally connected and used. The division into the N-sets may be performed in a unit of this driver integrated circuit, and plural sets may also exist in one driver integrated circuit. In each set of the X-driver 1513, correlation circuits 1541-1, ---, 1541-N and diffusion code generating circuits 1542-1, ---, 1542-N are assembled every set. A diffusion code set $S_p=\{C_{pk}\}$ (P=1, 2, ---, N) proper to each set is allocated to each set of the X-driver 1513, and the diffusion code generating circuits 1542-1, ---, 1542-N generate this allocated diffusion code set. Namely, the diffusion code generating circuit 1542-p of a p-th set generates each code of the code set Sp. The correlation between the diffusion code sets of each set is designed so as to be small. Further, the correlation between codes within the code set is also designed so as to be small. It is ideal to perfectly set the correlation to zero in each case. Namely, it is ideal to use an orthogonal code system.

The display data of a column q (q=1, 2, ---, n/N) of a p-th set (p=1, 2, ---, N) are next set to $D_{pq}$ to make an explanation. Dpq has information relative to a color and gradation and is namely constructed from plural bits as every 8 bits of each of RGB. A k-th bit of each Dpq is set to $b_k$.

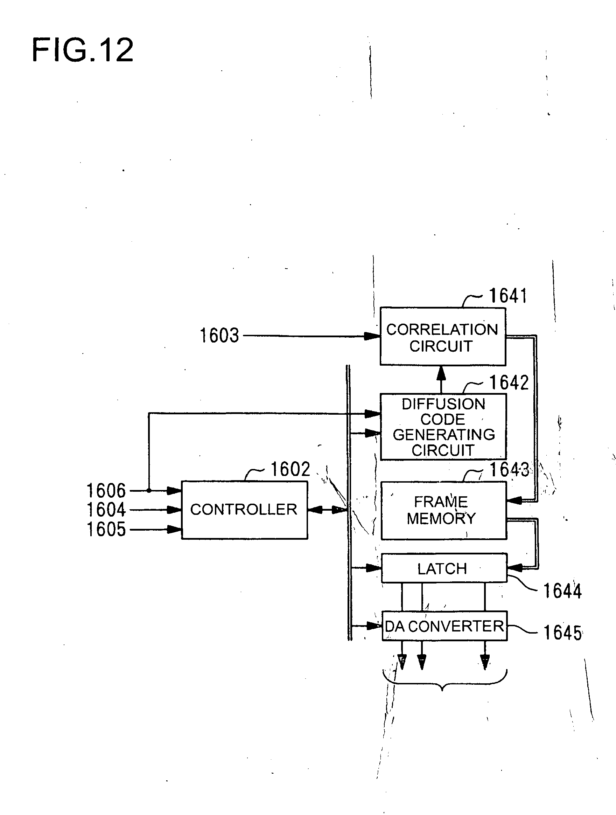

The diffusion code generating circuits 1542-1, ---, 1542-N of the X-driver 1513 side generates only the code set allocated to a self set. In contrast to this, a diffusion code generating circuit 1501 of the signal transmission side generates all the diffusion code sets used in accordance with necessity. The liquid crystal controller 1103 reads out the displayed display data from the video memory 1102, and outputs these display data to a multiplexing circuit 1503. In the multiplexing circuit 1503, the diffusion code set is selected on the basis of whether a pixel for displaying these display data is operated by the X-driver 1513 of which set. The multiplexing circuit 1503 then multiplexes the display data signal 1116 by this diffusion code set, and generates a multiplexing signal 1122. Namely, the display data signal 1116 sent out to the X-driver 1513 of the p-th set is multiplexed by the code set $S_p$. On the reception side of the signal, i.e., in each set of the X-driver 1513, only the diffusion code of a self set is generated with respect to the diffusion code, and no display data signal 1116 sent out to another set can be restored. Accordingly, a going destination of the display data signal 1116 is correctly determined. The multiplexing signal 1122 generated in the multiplexing circuit 1503 is modulated by the modulating circuit 1123, and is transmitted onto the liquid crystal display body 1108 side as an electromagnetic wave signal by the transmission antenna 1125. On the liquid crystal display body 1108 side, this electromagnetic wave signal is received by the reception antenna 1126, and the multiplexing signal is restored by the demodulating circuit 1124, and is delivered to the correlation circuits 1541-1, ---, 1541-N. As described later in Fig. 12, the reception antenna 1126 and the demodulating circuit 1124 may be also used commonly in each set, and dedicated reception antenna and modulating circuit may be also arranged every set.

In the display of an image, the correlations between scanning lines and between frames are large and there are many cases in which it is not necessary to update the display data previously transmitted. The liquid crystal controller 1103 compares the display data on a scanning line located by one line before and display data intended to be sent out this time, and sends out the display data to only a set having a different portion of the display data. On the liquid crystal display body 1108 side, when no correlation circuits 1541-1, ---, 1541-N can detect the display data, it is judged that it is not necessary to change the display data. The operations of the X-shift registers 1543-1, ---, 1543-N, the latches 1544-1, ---, 1544-N and the DA converters 1545-1, ---, 1545-N are stopped and no output is changed.

Thus, since the display data sending-out operation to a set requiring no update can be stopped, the electric power consumption of a device can be greatly reduced. Namely, since the sending destination of the display data is addressed by the diffusion code every set by taking the above-mentioned construction, the sending destination of the display data can be designated by changing the diffusion code. Therefore, the data transmission can be stopped with respect to the set unnecessary to rewrite the display data and electric power consumption can be reduced. As the number of sets (i.e., N) is increased, the control of transmission/stoppage of the display data can be finely executed, and the effect of electric power consumption is increased. When N is set to be largest, N=n (transversal pixel number) is set. However, when N is excessively increased, there is the tradeoff that the code length is lengthened and the arithmetic amount of multiplexing/restoration is increased.

With respect to the sending-out order of the display data, each bit $b_k$ (k=1, 2, ---, w and w is a bit number of a pixel) may be multiplexed every pixel from left to right as in $D_{11}$, $D_{12}$, ---, $D_{1N}$, $D_{21F}$ $D_{22}$, ---, $D_{2N}$, ---. The bits may be also multiplexed and sent out every bit such that each $b_1$ of $D_{11}$, $D_{21}$, ---, $D_{N1}$ is multiplexed and each $b_2$ is subsequently multiplexed. After the multiplexing and sending-out operations are terminated with respect to a first pixel, $b_1$ of a second pixel, i.e., $D_{22}$, $D_{22}$, ---, $D_{N2}$ may

be multiplexed and $b_2$ may be also subsequently multiplexed.

In this case, in the former method, the diffusion code set used at the sending-out time of $D_{11}$, $D_{12}$, ---, $D_{1N}$ is $S_1=\{C_{1k}\}$ (k=1, 2, ---, w). The diffusion code set used at the sending-out time of $D_{21}$, $D_{22}$, ---, $D_{2N}$ is $S_2=\{C_{2k}\}$(k=1 2, ---, w). Therefore, no different diffusion code sets are simultaneously used. In contrast to this, in the latter method, the sending-out operation is performed in a bit serial of set parallel. Therefore, plural different diffusion code sets are simultaneously used. In the latter, the number of codes in each code set may be 1 or 2 (a sending case in parallel every two bits in each pixel) in many cases. Thus, since each set and each bit can be addressed by the diffusion code, the sending-out order can be arbitrarily changed. In the former method, there is an advantage able to send out the display data read out of the video memory without rearrangement. However, a period of no signal exists with respect to a set requiring no data update, and the bit transfer rate is high and a large number of diffusion codes are required. In the latter method, the liquid crystal controller 1103 reads out data of a pixel every set and once stores these data and must then rearrange and output these data every bit. However, the transfer speed per bit can be reduced and the required diffusion code number may be set to be small, and code design is easy. The latter method will be described further in detail in embodiment 9.

[Embodiment 8]

Fig. 12 is a view for explaining still another embodiment in the present invention. Portions corresponding to each set of the X-driver 1513, the correlation circuits 1541-1, ---, 1541-N, the diffusion code generating circuits 1542-1, ---, 1542-N, the reception antenna 1126 and the demodulating circuit 1124 in Fig. 11 can be replaced with the construction of Fig. 12. Fig. 12 shows only one set.

In this embodiment, a frame memory 1643 is arranged every set on the liquid crystal display body 1108 side to reduce the transfer of the display data signal 1116 by utilizing the correlation between frames of a display image. When the display is at rest, no display data signal 1116 is transferred and data stored to the frame memory 1643 are utilized.

Portions of the X-driver 1513, etc. of Fig. 11 are replaced with the construction of Fig. 12 and will next be explained.

When data of the video memory 1102 are rewritten, the liquid crystal controller 1103 performs the multiplexing operation by the multiplexing circuit 1503 using the diffusion code set allocated to a set having a pixel for displaying the rewritten data. The liquid crystal controller 1103 then modulates the multiplexing signal 1122 and sends out this multiplexing signal 1122 to the liquid crystal display body 1108 side as an electromagnetic wave signal. The liquid crystal controller 1103 can detect that the data of the video memory 1102 are rewritten by the CPU 1101 by monitoring control (a write pulse and an address bus of the video memory 1102) from the CPU 1101 to the video memory 1102. Further, the CPU 1101 can detect a portion requiring the rewriting every frame in expansion of MPEG, etc. from its compression expansion algorithm. The CPU 1101 may also directly notify the rewriting portion able to be detected in this way to the liquid crystal controller 1103. (In Fig. 11, a signal path for this notification is omitted.) Only the rewritten display data of a pixel are sent out in synchronization with the vertical synchronous signal 1118 and the horizontal synchronous signal 1114 generated by the liquid crystal controller 1103. The display data may be also sent out every time the data of the video memory 1102 are rewritten. However, the rewriting operation of the video memory 1102 of the CPU 1101 is normally performed very rapidly in comparison with timing requiring the display data on the liquid crystal display body 1108 side. Therefore, it is preferable to perform the sending-out operation in synchronization with the horizontal synchronous signal 1114 and the vertical synchronous signal 1118 just before the liquid crystal display body 1108 requires the display data. Further, a very long diffusion code is required to address all pixels by addressing using the diffusion code. Therefore, data are sent out in synchronization with the synchronous signals, and e.g., a row address, a pixel address of the X-direction within the set, etc. are calculated from timing from the synchronous signals. Thus, it is preferable that an address bit number to be designated is reduced and an operation in a short diffusion code can be performed.

The reception antenna 1126 built in the liquid crystal display body 1108 receives the multiplexing signal 1122 transmitted by an electromagnetic wave and demodulates the multiplexing signal 1122 by the demodulating circuit 1124 and sends out this multiplexing signal 1122 to a correlation circuit 1641. The correlation circuit 1641 calculates the correlation with a diffusion code set allocated to a self set, and restores the display data signal 1116 sent out to the self set, and accumulates the display data signal 1116 to the frame memory 1643. When such a display data signal 1116 generated by the liquid crystal controller 1103 is not sent, the previous data are stored without updating the display data used in the display of the previous frame accumulated in the frame memory 1643. A controller 1602 takes the synchronization of a diffusion code generating circuit 1642 in synchronization with a chip clock 1505 inputted to a terminal 1603, and the horizontal synchronous signal 1114 and the vertical synchronous signal 1118 respectively inputted to terminals 1604, 1605, and controls timing. The controller 1602 also controls the operations of a latch 1644 and a DA converter 1645 in conformity with a display body operation.

Namely, the latch 1644 reads the display data on a scanning line to be next displayed from the frame memory 1643 in conformity with the timing outputted by the controller 1602, and holds the display data. When the next horizontal synchronous signal 1114 is inputted, the controller 1602 starts the DA converter 1645 and outputs and displays a driving voltage in the liquid crystal display body 1108 in accordance with the data held in the latch 1644.

In the above embodiment, the explanation is made by using the frame memory 1643 in the holding of the data displayed in the previous frame. However, when a pixel itself has its holding function by capacitance, etc. every pixel of the display body, the frame memory 1643 can be also omitted.

Further, the reception antenna 1126 and the demodulating circuit 1124 can be also arranged every each set instead of the arrangement of one reception antenna 1126 and one demodulating circuit 1124. If such a construction is taken, it is not necessary to deliver the output of the demodulating circuit 1124 to each set by wiring so that mounting can be more effectively performed.

In accordance with the above construction in the present invention, since the sending destination of the display data signal 1116 is addressed to the diffusion code, the display data signal 1116 can be easily sent out to only a set requiring no rewriting, and there is a great effect in a reduction in electric power consumption of the display device.

[Embodiment 9]

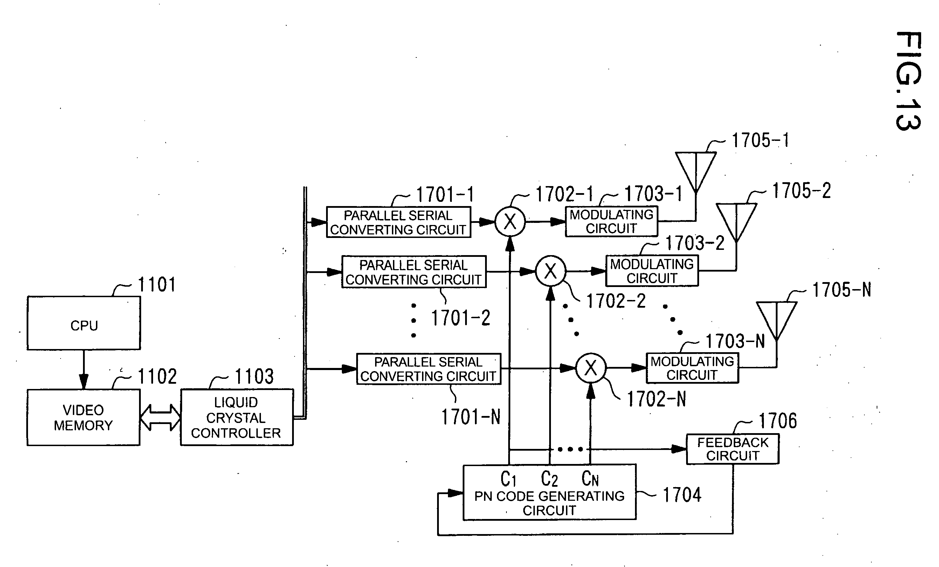

Fig. 13 is a view showing still another embodiment in the present invention, and illustrates the sending-out order of the display data signal in more detail. The sending-out order of the display data signal corresponds to a case using the latter method in the embodiment 7, and Fig. 13 is a view showing the construction of its signal transmission side in more detail.

The liquid crystal controller 1103 first reads the data of the pixel of $D_{11}$ of a row intended to send out the display data of the liquid crystal display body 1108 from the video memory 1102. The data read out of the video memory 1102 are information of plural bits having information of a color and gradation. This information is sent to a parallel serial converting circuit 1701-1, and is converted into a serial signal by parallel serial conversion. Thereafter, the serial signal is multiplied by a diffusion code $C_1$ generated by a PN code generating circuit 1704 in a multiplying circuit 1702-1, and is modulated by a modulating circuit 1703-1, and is transmitted as an electromagnetic wave signal from a transmission antenna 1705-1.

Next, the liquid crystal controller 1103 reads the data of the pixel of $D_{21}$ of a row intended to send out the display data of the liquid crystal display body 1108 with a delay of $1t_c$ from the video memory 1102, and sends these pixel data to a parallel serial converting circuit 1701-2. The parallel serial converting circuit 1701-2 converts the display data of the pixel of $D_{21}$ into a serial

signal, and this signal is then multiplied by a diffusion code $C_2$ generated from the PN code generating circuit 1704 by a multiplying circuit 1702-2, and is modulated by a modulating circuit 1703-2. The modulated signal is transmitted as an electromagnetic wave signal from a transmission antenna 1705-2.

Next, a similar operation is continued until the pixel of $D_{N1}$, and it is also continued to pixels of $D_{12}$, $D_{22}$, ---, $D_{N2}$. In the pixel of $D_{NM}$ (here, M=n/N), the data sending-out of one row is terminated and it is continued to the display data transmission of the next row.

The PN code generating circuit 1704 is constructed by a shift register and a feedback circuit 1706. The feedback circuit 1706 takes an exclusive logical sum of the output (tap) of a suitable stage of the shift register, and feeds back this exclusive logical sum to a first stage of the shift register. In a combination of data held in the shift register, a maximum number (i.e., $2^S-1$ when the shift registers of s-stages are used) except for all zero can be taken in accordance with a taking method of the tap.

In the embodiment of Fig. 13, since each diffusion code is taken from the same shift register, these diffusion codes have the same pattern in which these diffusion codes are merely mutually shifted by an integer times $t_c$. The code generated in this way is called an M-series or a PN series. When a self correlation function has the same phase ($\tau$=0), $2^S-1$ is set and -1 is set in all the other cases. It is known that characteristics well similar to those in white noises are formed. In accordance with the construction as in this embodiment, one code generating circuit may be arranged since the used diffusion code uses a code set having the same pattern and different in only phase. Moreover, the PN code is generated by the shift register. Therefore, if the code is taken out of each stage of the shift register, the code set different in phase can be taken out, and the circuit can be simplified.

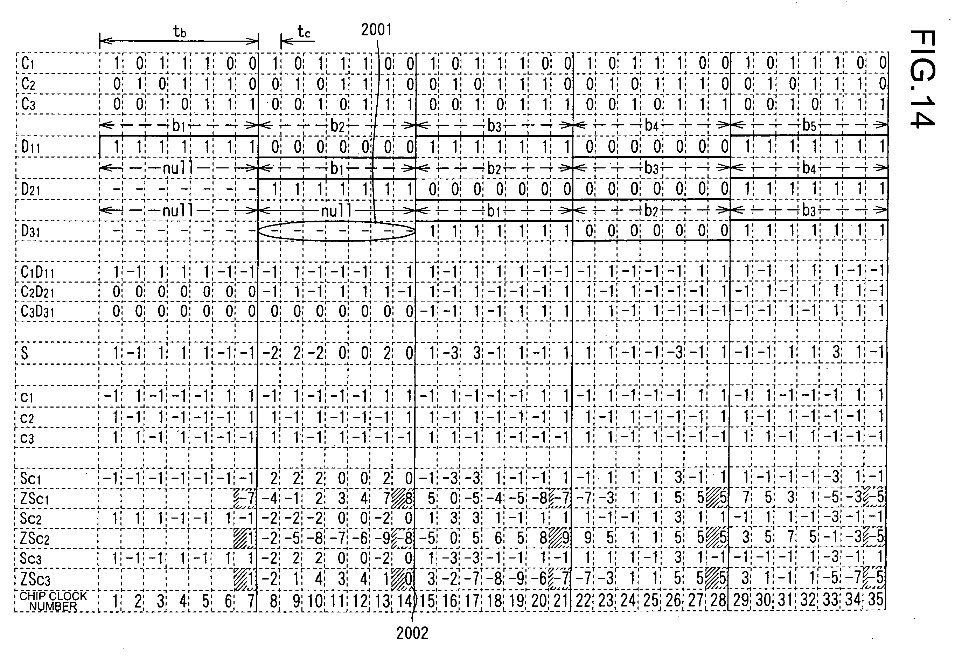

Next, the summary of the operation will be explained by using the time chart of Fig. 14. A chip clock number is added to a lowermost row of this figure to easily make the following explanation.

When time is referred in the following description, this chip clock number is used. For example, when the front edge of a time chip clock number 5 is shown, it is said as the front edge of $t_{c5}$. Similar to the case of Fig. 9, $t_b$ in Fig. 14 shows one symbol period, and $t_c$ shows a chip clock period. The case of 7 in code length of the diffusion code and 3 in multiplexing number is explained as an example to easily make the explanation. However, in the actual execution, a longer code should be used and the multiplexing number should be also set to be larger. $C_1$, $C_2$, $C_3$ are the PN series of 7 in length used as the diffusion code, and are shifted in phase every $t_c$. Here, $t_b$=$7t_c$ is set.

The liquid crystal controller 1103 reads $D_{11}$ until $t_{c1}$ is started, and sends out these data to the parallel serial converting circuit 1701-1. The parallel serial converting circuit 1701-1 sequentially performs an output operation as serial data from bit 1 of $D_{11}$. $D_{11}$ of Fig. 14 shows a situation in which these data are outputted from bit $b_1$ every $t_b$. Namely, $b_1$ ($b_1$=1 in this example) from $t_{c1}$ to $t_{c7}$, $b_2$ ($b_2$=0 in this example) from $t_{c8}$ to $t_{c14}$, and sending-out data every $7t_c$ are hereinafter sequentially updated.

At an interval from $t_{c1}$ to $t_{c7}$, i.e., while the parallel serial converting circuit 1701-1 sends out $b_1$, the liquid crystal controller 1103 reads $D_{21}$ and sends out these data to the parallel serial converting circuit 1701-2, and converts these data into serial data. $D_{21}$ is outputted as $b_1$ ($b_1$=1 in this example), b2 (b2=0 in this example) --- every $7t_c$ from $t_{c8}$, i.e., a second symbol. Similarly, the sending-out of $D_{31}$ is started from a third symbol, i.e., $t_{c15}$. A one symbol interval before the parallel serial conversion of $D_{21}$ is started, and a two-symbol interval before $D_{31}$ is parallel-serial-converted, are a null period for sending nothing.

These signals are respectively multiplied by diffusion codes $C_1$, $C_2$, $C_3$ by the multiplying circuits 1702-1, 1702-2, 1702-3 so that $C_1D_{11}$, $C_2D_{21}$, $C_3D_{31}$ are outputted. As previously described, the multiplying calculation at this time is made by making an analog value -1 correspond to logic 1 of the diffusion code and the display data, and making an analog value 1 correspond to logic 0.

In Fig. 14, rows located above from the row of $D_{21}$ are shown by logical values, and rows located below from the row of $C_1D_{11}$ are shown by analog values. Further, in the null period having no sending-out data, an analog value 0 is multiplied. S is a multiplexing signal provided by adding $C_1D_{11}$, $C_2D_{21}$, $C_3D_{31}$. Since the adding calculation of signals is made in a space in Fig. 13, it may be considered that S is the intensity of an electromagnetic wave of the space.

$C_1$, $C_2$, $C_3$ are respectively provided by rewriting the logical value representations of $C_1$, $C_2$, $C_3$ to analog value notations. The multiplexing signal S is respectively multiplied by $c_1$, $c_2$, $c_3$ to calculate the correlation with $C_1$, $C_2$, $C_3$ so that $Sc_1$, $Sc_2$, $Sc_3$ are calculated. $\Sigma Sc_1$, $\Sigma Sc_2$, $\Sigma Sc_3$ are integrated values until before $7t_c$ from that time point. A strong correlation is shown in a place (hatched in Fig. 14) of termination of each $t_b$ period, and a received bit can be judged. Namely, logical value 0 is set at the time of a positive large value, and logical value 1 is set at the time of a negative large value. The logical value becomes about zero at the null time for sending no signal. For example, in a portion of null2001 an integrated value 2002 becomes 0. When the PN series is used as such a diffusion code, a slight error is included since no correlation perfectly becomes zero when the chip phase is shifted. Accordingly, it is necessary to take a countermeasure in which the code length is set to be longer and the diffusion ratio is raised, etc. Further, there is also a method for securing the orthogonal property by taking a balance by slightly offsetting the PN code. In this case, performance able to correctly calculate and process the offset amount by an adding circuit, a correlation circuit of the signal reception side and a multiplying circuit is required. A code set perfectly having the orthogonal property can be also used instead of the PN code.

The liquid crystal controller 1103 sends out the display data signal 1116 to only a set requiring update of the display data signal 1116. Null is transmitted to a set requiring no transmission of the display data signal 1116. If null can be received on the signal reception side, it is known that no update of the display data signal 1116 of that set is required. Accordingly, it can be judged whether the update is necessary or not by receiving the lead portion of each set. When no update is required, previous data are used in the display data, and the operation of an unnecessary circuit is stopped. Thus, electric power consumption of the display device can be greatly reduced.

In this embodiment, it is explained as a premise that the frame memory, i.e., one screen amount or more is stored as the video memory 1102. However, the frame memory is not necessarily required in a television signal such as NTSC, etc.. If a line buffer memory of 1 to 2 scanning lines is arranged as the video memory and a portion requiring the update is detected even in such a case, it is possible to perform a transfer operation not necessarily obeying the scanning order from left to right as in this embodiment. In this case, since unnecessary transfer can be omitted by utilizing the correlation between scanning lines, there is an effect in a reduction in electric power of the display device.

As mentioned above, in accordance with these above constructions in the present invention, various difficulties in the transmission of the display data including a very high frequency component and requiring high speed data transfer can be reduced in the display device. Since a signal can be multiplexed by the diffusion code, the number of line paths required in the transmission can be reduced. Further, a frequency band included in the display data can be narrowed, and the line path can be easily designed. Further, in the display of an image pattern in which a strong spectrum peak appears at a spatial frequency of the displayed image, the display data are also diffused in frequency by the diffusion code. Therefore, no strong spectrum peak appears at a specific frequency, and there is a great effect in the EMI countermeasure. Further, since data can be addressed by the diffusion code, a data sending destination can be designated without a special addressing means. Thus, data can be transferred from the video memory to the display body only when the display is changed. There is a great effect in a reduction in electric power consumption of the display device.

In the above embodiment modes, the display device of a large-sized television is explained as an example. However, the present invention is not limited to the above embodiment modes. For example, the present invention can be also applied to wide uses in connection, etc. with a display body in an electronic device such as a note book computer, a portable telephone, etc.

## Claims

1. A display device comprising:

   display means for displaying display data;
   dividing means for dividing and generating the display data displayed in said display means as plural N (N is an integer of 2 or more) serial signals;
   multiplying means for multiplying each of said serial signals by a different code;
   synthesizing means for synthesizing an output signal of said multiplying means to serial signals smaller than said N in number;
   restoring means for restoring said display data by calculating the correlation with an output signal of said synthesizing means and said code; and
   driving means for operating said display means on the basis of a signal restored by said restoring means.

2. The display device according to claim 1, wherein said display means has pixels arranged in a matrix shape, and the display is performed by line sequential scanning.

3. The display device according to claim 1 or 2, wherein said dividing means divides pixel data of each pixel every bit, and serially outputs the pixel data every pixel.

4. The display device according to claim 1 or 2, wherein said dividing means divides columns of said display means into N-sets, and serially outputs a pixel signal every said each set.

5. A display device comprising:

   display means having pixels arranged in a matrix shape;
   dividing means for dividing display data displayed in said display means every column of plural N (N is an integer of 2 or more) sets, and generating the display data as serial signals;
   multiplying means for multiplying each of said serial signals by a different code;
   synthesizing means for synthesizing an output signal of said multiplying means to serial signals smaller than said N in number;
   restoring means for restoring said display data by calculating the correlation with an output signal of said synthesizing means and said code;
   memory means for temporarily storing an output signal of said restoring means; and
   driving means for operating said display means every column on the basis of the signal stored by said memory means.

6. The display device according to claim 5, wherein said dividing means outputs the display data to only a set requiring rewriting.

7. The display device according to any one of claims 1 to 6, wherein the display device further comprises:

   a first diffusion code generating circuit for generating a code supplied to said multiplying means; and
   a second diffusion code generating circuit for generating the same code as a code supplied to said restoring means and supplied to said multiplying means; and
   the operations of said first diffusion code generating circuit and said second diffusion code generating circuit are synchronized by the same clock signal.

8. A display device comprising:

   display means having pixels arranged in a matrix shape and displayed and operated by line sequential scanning;
   display data generating means for generating display data every scanning line of said display means;
   driving means divided into N (N is an integer of 2 or more) sets for delivering the display data generated by said display data generating means to each predetermined pixel as driving data; and
   detecting means for detecting a pixel different in the display data between adjacent scanning lines;

   wherein the display data are sent out from said display data generating means to said driving means with respect to only a set including one pixel or more for displaying the display data different from the display data displayed on a just close scanning line.

9. The display device according to claim 8, wherein a code for code multiplexing is allocated to each set of said driving means, and it is designated whether the display data are sent to which set of said driving means by said code in the transmission of the display data from said display data generating means to said driving means.

10. The display device according to any one of claims 1 to 9, wherein said code is an orthogonal code.

11. A display device comprising:

   display means for displaying display data;
   dividing means for dividing and generating the display data displayed in said display means as plural N (N is an integer of 1 or more) serial signals;

plural multiplying means for multiplying each of said serial signals by a different code;

signal transmitting means for converting a signal outputted from said multiplying means into an electromagnetic wave signal, and transmitting the electromagnetic wave signal;

signal receiving means for receiving said electromagnetic wave signal;

restoring means for restoring said display data by calculating the correlation with the receiving signal received by said signal receiving means and said code; and

driving means for operating said display means on the basis of a signal restored by said restoring means.

12. The display device according to claim 11, wherein said signal transmitting means has:

synthesizing means for synthesizing the output signal of said multiplying means to serial signals smaller than said N in number;

modulating means for modulating a signal outputted from said synthesizing means to a predetermined wireless frequency; and

a transmission antenna for radiating an electromagnetic wave by receiving an output from said modulating means.

13. The display device according to claim 11, wherein said signal transmitting means has:

plural modulating means for modulating the output signal of each of said multiplying means to a predetermined wireless frequency; and

plural transmission antennas for radiating an electromagnetic wave by receiving an output of each of said plural modulating means.

14. The display device according to claim 11, wherein the signal outputted from said multiplying means has a wireless frequency component sufficient to radiate electromagnetic field energy, and plural transmission antennas for radiating the electromagnetic wave by receiving each signal of said multiplying means are arranged.

15. The display device according to any one of claims 11 to 14, wherein said display means has pixels arranged in a matrix shape, and the display is performed by line sequential scanning.

16. The display device according to any one of claims 11 to 15, wherein said dividing means divides pixel data of each pixel every bit; and serially outputs the pixel data every pixel.

17. The display device according to any one of claims 11 to 15, wherein said dividing means divides columns of said display means into N-sets, and outputs a pixel signal of said each set in parallel.

18. A display device comprising:

display means having pixels arranged in a matrix shape;

dividing means for dividing display data displayed in said display means every column of plural N (N is an integer of 1 or more) sets, and generating the display data as serial signals;

multiplying means for multiplying each of said serial signals by a different code;

synthesizing means for synthesizing an output signal of said multiplying means to serial signals smaller than said N in number;

signal transmitting means for converting a signal outputted from said synthesizing means into an electromagnetic wave signal, and transmitting the electromagnetic wave signal;

demodulating means for receiving and demodulating said electromagnetic wave signal;

restoring means for restoring said display data by calculating the correlation with an output of said demodulating means and said code;

memory means for temporarily storing an output signal of said restoring means; and

driving means for operating said display means every column on the basis of the signal stored by said memory means.

19. The display device according to claim 18, wherein said dividing means outputs the display data to only a set requiring rewriting.

20. The display device according to any one of claims 11 to 19, wherein the display device further comprises:

a first code generating circuit for generating a code supplied to said multiplying means; and

a second code generating circuit for generating the same code as a code supplied to said restoring means and supplied to said multiplying means; and

the operations of said first code generating circuit and said second code generating circuit are synchronized by the same clock signal.

21. A display device comprising:

display means having pixels arranged in a matrix shape and displayed and operated by line sequential scanning;

display data generating means for generating display data every scanning line of said display means;

signal transmitting means for converting a signal outputted from said display data generating means into an electromagnetic wave signal, and transmitting the electromagnetic wave signal;

demodulating means for receiving and demodulating said electromagnetic wave signal;

driving means divided into N (N is an integer of 1 or more) sets for delivering the display data demodulated by said demodulating means to each predetermined pixel as driving data; and

detecting means for detecting a pixel different in the display data between adjacent scanning lines;

wherein the display data are sent out from said display data generating means to said driving means with respect to only a set including one pixel or more for displaying the display data different from the display data displayed on a just close scanning line.

22. The display device according to claim 21, wherein a code for code multiplexing is allocated to each set of said driving means, and it is designated whether the display data are sent to which set of said driving means by said code in the transmission of the display data from said display data generating means to said driving means.

23. The display device according to any one of claims 11 to 22, wherein said code is an orthogonal code, the same PN code shifted in phase, or the same PN code shifted in phase and adding an offset.

FIG. 1

# FIG. 2

FIG. 3A

FIG. 3B

# FIG. 4

FIG. 5

EP 1 796 072 A1

# FIG. 6

CORRELATION CIRCUIT ~641

603 →

DIFFUSION CODE GENERATING CIRCUIT ~642

602

606 →
604 → CONTROLLER
605 →

FRAME MEMORY ~643

LATCH ~644

DA CONVERTER ~645

# FIG. 7

FIG. 8

EP 1 796 072 A1

EP 1 796 072 A1

FIG. 9A

FIG. 9B

# FIG.10

# FIG.11

EP 1 796 072 A1

# FIG.12

1641 CORRELATION CIRCUIT

1603 →

1642 DIFFUSION CODE GENERATING CIRCUIT

1602 CONTROLLER

1606 →
1604 →
1605 →

1643 FRAME MEMORY

LATCH

1644

DA CONVERTER — 1645

# FIG.13

## FIG.14

EP 1 796 072 A1

t_b, t_c, 2001, 2002

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|---|---|---|---|---|---|---|---|---|---|---|---|---|---|---|---|---|
| C₁ | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 | 0 | 0 |
| C₂ | 0 | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 | 0 |
| C₃ | 0 | 0 | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 | 0 | 0 | 1 | 0 | 1 | 1 | 1 |
| D₁₁ (b₁…b₅) | 1 | 1 | 1 | 1 | 1 | 1 | 1 | 0 | 0 | 0 | 0 | 0 | 0 | 0 | 1 | 1 | 1 | 1 | 1 | 1 | 1 | 0 | 0 | 0 | 0 | 0 | 0 | 0 | 1 | 1 | 1 | 1 | 1 | 1 | 1 |
| D₂₁ (null,b₁…b₄) | - | - | - | - | - | - | - | 1 | 1 | 1 | 1 | 1 | 1 | 1 | 0 | 0 | 0 | 0 | 0 | 0 | 0 | 0 | 0 | 0 | 0 | 0 | 0 | 0 | 1 | 1 | 1 | 1 | 1 | 1 | 1 |
| D₃₁ (null,null,b₁…b₃) | - | - | - | - | - | - | - | - | - | - | - | - | - | - | 1 | 1 | 1 | 1 | 1 | 1 | 1 | 0 | 0 | 0 | 0 | 0 | 0 | 0 | 1 | 1 | 1 | 1 | 1 | 1 | 1 |
| C₁D₁₁ | 1 | -1 | 1 | 1 | 1 | -1 | -1 | -1 | 1 | -1 | -1 | -1 | 1 | 1 | 1 | -1 | 1 | 1 | 1 | -1 | -1 | -1 | 1 | -1 | -1 | -1 | 1 | 1 | 1 | -1 | 1 | 1 | 1 | -1 | -1 |
| C₂D₂₁ | 0 | 0 | 0 | 0 | 0 | 0 | 0 | -1 | 1 | -1 | 1 | 1 | 1 | -1 | 1 | -1 | 1 | -1 | -1 | -1 | 1 | 1 | -1 | 1 | -1 | -1 | -1 | 1 | -1 | 1 | -1 | 1 | 1 | 1 | -1 |
| C₃D₃₁ | 0 | 0 | 0 | 0 | 0 | 0 | 0 | 0 | 0 | 0 | 0 | 0 | 0 | 0 | -1 | -1 | 1 | -1 | 1 | 1 | 1 | 1 | 1 | -1 | 1 | -1 | -1 | -1 | -1 | -1 | 1 | -1 | 1 | 1 | 1 |
| S | 1 | -1 | 1 | 1 | 1 | -1 | -1 | -2 | 2 | -2 | 0 | 0 | 2 | 0 | 1 | -3 | 3 | -1 | 1 | -1 | 1 | 1 | 1 | -1 | -1 | -3 | -1 | 1 | -1 | -1 | 1 | 1 | 3 | 1 | -1 |
| C₁ | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 | 1 | 1 |
| C₂ | 1 | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 | 1 |
| C₃ | 1 | 1 | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 | 1 | 1 | -1 | 1 | -1 | -1 | -1 |
| Sc₁ | -1 | -1 | -1 | -1 | -1 | -1 | -1 | 2 | 2 | 2 | 0 | 0 | 2 | 0 | -1 | -3 | -3 | 1 | -1 | -1 | 1 | -1 | 1 | 1 | 1 | 3 | -1 | 1 | 1 | -1 | -1 | -1 | -3 | 1 | -1 |
| ZSc₁ | | | | | | | -7 | -4 | -1 | 2 | 3 | 4 | 7 | 8 | 5 | 0 | -5 | -4 | -5 | -8 | -7 | -7 | -3 | 1 | 1 | 5 | 5 | 5 | 7 | 5 | 3 | 1 | -5 | -3 | -5 |
| Sc₂ | 1 | 1 | 1 | -1 | -1 | 1 | -1 | -2 | -2 | -2 | 0 | 0 | -2 | 0 | 1 | 3 | 3 | 1 | -1 | 1 | 1 | 1 | -1 | -1 | 1 | 3 | 1 | 1 | -1 | 1 | 1 | -1 | -3 | -1 | -1 |
| ZSc₂ | | | | | | | 1 | -2 | -5 | -8 | -7 | -6 | -9 | -8 | -5 | 0 | 5 | 6 | 5 | 8 | 9 | 9 | 5 | 1 | 1 | 5 | 5 | 5 | 3 | 5 | 7 | 5 | -1 | -3 | -5 |
| Sc₃ | 1 | -1 | -1 | 1 | -1 | 1 | 1 | -2 | 2 | 2 | 0 | 0 | -2 | 0 | 1 | -3 | -3 | -1 | -1 | 1 | -1 | 1 | 1 | 1 | -1 | 3 | 1 | -1 | -1 | -1 | -1 | 1 | -3 | -1 | 1 |
| ZSc₃ | | | | | | | 1 | -2 | 1 | 4 | 3 | 4 | 1 | 0 | 3 | -2 | -7 | -8 | -9 | -6 | -7 | -7 | -3 | 1 | 1 | 5 | 5 | 5 | 3 | 1 | -1 | 1 | -5 | -7 | -5 |
| CHIP CLOCK NUMBER | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 |

# FIG.15

1819 MAIN BODY

1801 CPU

1802 VIDEO MEMORY

1803 LIQUID CRYSTAL CONTROLLER

1804 / 1805 / 1813

X-SHIFT REGISTER

LATCH

1806 DA CONVERTER

1807 Y-DRIVER

1809

1808

1810

1814
1815
1816
1817
1818
1817'

1811
1812
1818

# FIG.16

(a) HORIZONTAL SYN-
CHRONOUS SIGNAL

(b) X-CLOCK SIGNAL

(c) X1 LATCH

(d) X2 LATCH

(e) X3 LATCH

(f) Xm LATCH

(g) VERTICAL SYN-
CHRONOUS SIGNAL

(h) HORIZONTAL SYN-
CHRONOUS SIGNAL

(i) Y1

(j) Y2

(k) Yn

## INTERNATIONAL SEARCH REPORT

| International application No. |
|---|
| PCT/JP2005/016884 |

A.   CLASSIFICATION OF SUBJECT MATTER
*G09G3/36*(2006.01), *G09G3/20*(2006.01), *H04B1/707*(2006.01),
*H04N5/66*(2006.01), *H04N5/00*(2006.01), *G09G5/00*(2006.01)

According to International Patent Classification (IPC) or to both national classification and IPC

B.   FIELDS SEARCHED

Minimum documentation searched (classification system followed by classification symbols)
*G09G3/00-5/42*(2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2003-29722 A  (Sharp Corp.), 31 January, 2003 (31.01.03), | 1,2,4,11,12, 15,17 |
| Y | Par. Nos. [0043] to [0046], [0049], [0078] to [0081]; Figs. 1, 6, 7 | 3,5-7,9,10, 16,18-23 |
| A | (Family: none) | 13,14 |
| Y | JP 11-259268 A  (Sanyo Electric Co., Ltd.), 24 September, 1999 (24.09.99), Par. Nos. [0005] to [0011]; Fig. 6 (Family: none) | 3,16 |
| Y | JP 2001-228841 A  (International Business Machines Corp.), 24 August, 2001 (24.08.01), Par. Nos. [0030] to [0031]; Fig. 4 & US 2001/0030649 A1 | 3,16 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 December, 2005 (13.12.05) | 20 December, 2005 (20.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

| | International application No. |
|---|---|
| | PCT/JP2005/016884 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-130910 A   (Seiko Epson Corp.),<br>13 May, 1994 (13.05.94),<br>Par. Nos. [0015] to [0017], [0020], [0021];<br>Figs. 1, 2<br>& US 5726677 A          & GB 2271458 A<br>& DE 4322666 A | 5-7,18-20 |
| A | WO 2001/029814 A1  (Seiko Epson Corp.),<br>26 April, 2001 (26.04.01),<br>Page 15, line 20 to page 18, line 14;<br>Figs. 1, 2<br>& EP 1146501 A1 | 5-7,18-20 |
| X<br>Y | JP 2001-306014 A  (Seiko Epson Corp.),<br>02 November, 2001 (02.11.01),<br>Par. Nos. [0039] to [0053], [0059] to [0062],<br>[0065] to [0067]; Figs. 1 to 6<br>& US 2002/0000969 A1 | 8,21<br>9,10,22,23 |
| A | JP 9-159993 A  (Toshiba Corp.),<br>20 June, 1997 (20.06.97),<br>Par. Nos. [0018] to [0027]; Figs. 1, 2<br>& KR 218985 B | 8-10,21-23 |

Form PCT/ISA/210 (continuation of second sheet) (April 2005)

## INTERNATIONAL SEARCH REPORT

| International application No. |
| --- |
| PCT/JP2005/016884 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

   (See extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**INTERNATIONAL SEARCH REPORT**

International application No.

PCT/JP2005/016884

Continuation of Box No.III of continuation of first sheet(2)

The matter common to the inventions of claims 1-7 and 11-20 relates to "to send the divided display data by encoding, dividing and multiplexing the divided data, and to restore the original divided display data on the reception side", and the matter common to the inventions of claims 8-10 and 21-23 relates to "to detect the pixels of different display data between adjoining scanning lines and to send the display data from said display data generating means to said drive means only for the group containing at least one pixel for displaying the display data different from the display data displayed on the close scanning line". Since there is no technical relationship among those inventions involving one or more of the same or corresponding special technical features, the inventions are not so linked as to form a single general inventive concept.

Moreover, the matter common to the inventions of claims 1-7 and 11-20 relates to "to send the divided display data by encoding, dividing and multiplexing the divided data, and to restore the original divided display data on the reception side", as described above.

However, the international search has revealed that said matter is not novel, since it is disclosed in document JP 2003-29722 A (Sharp Corp.), 31 January, 2003 (31.01.03), Par. Nos. [0043] - [0046], [0049], [0078] - [0081], [Fig. 1], [Fig. 6] and [Fig. 7].

Consequently, the common feature is not the special technical feature within the meaning of PCT Rule 13.2, second sentence, since said matter makes no contribution over the prior art.

Therefore, there is no matter common to all the inventions of claims 1-7 and 11-20. Since there exists no other common matter which can be considered as a special technical feature within the meaning of PCT Rule 13.2, second sentence, no technical relationship within the meaning of PCT rule 13 between those different inventions can be seen.

Consequently, it is apparent that the inventions relating to claims 1-4 and 11-17 and claims 5-7 and 18-20 do not satisfy the requirement of unity of invention.

Form PCT/ISA/210 (extra sheet) (April 2005)

**EP 1 796 072 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3086456 B
- JP 3330359 B
- JP 3349426 B
- JP 3349490 B